# EUROPEAN PATENT APPLICATION

(11) **EP 1 704 902 A1**
(43) Date of publication of application: **27.09.2006**
(21) Application number: 04793397.3
(22) Date of filing: 29.10.2004
(51) Int. Cl.: A63F 13/00, A63F 13/12

(54) **GAME PROGRESS MANAGEMENT APPARATUS, GAME PROGRESS MANAGEMENT METHOD, AND COMPUTER READABLE RECORDING MEDIUM IN WHICH GAME PROGRESS MANAGEMENT PROGRAM HAS BEEN RECORDED**

(30) Priority: 10.12.2003 JP 2003412465
(71) Applicant: Konami Digital Entertainment Co., Ltd., Minato-ku Tokyo 106-6114 (JP)
(72) Inventor: KUBOTA, Kazutaka, KONAMI Digit. Enter. Co.Ltd., Minato-ku, Tokyo 106-6114 (JP); KONISHI, Kazuma, KONAMI Digit. Enter. Co.Ltd., Minato-ku, Tokyo 106-6114 (JP); HARANO, Yuuki, KONAMI Digit. Enter. Co.Ltd., Minato-ku, Tokyo 106-6114 (JP); SHIBAMIYA, Masakazu, KONAMI Digit. Enter, Co.Ltd., Minato-ku, Tokyo 106-6114 (JP); AKASHI, Shigeto, KONAMI Digit. Enter.Co.Ltd., Minato-ku, Tokyo 106-6114 (JP); NISHIYAMA, Masahiro, KONAMI Digit. Enter. Co.Ltd., Minato-ku, Tokyo 106-6114 (JP); WADA, Hiroyuki, c/o Konami Sports & Life Co., Ltd., Shinagawa-ku Tokyo 1400002 (JP)
(74) Representative: Schiuma, Daniele Wolfgang
(86) International application number: PCT/JP2004/016477
(87) International publication number: WO 2005/056137

(57) **Abstract**

A central server 3 (CPU 361, RAM 362) is provided with a player information storage 362a for storing player identification information in correspondence with shop identification information of belonging shops, a terminal storage 362b for storing terminal identification information in correspondence with the shop identification information, a shop information storage 362c for storing the shop identification information in correspondence with area identification information, a result tabulating section 361c for tabulating results of players for each belonging shop to determine a within-shop ranking, a shop judging section 361d for judging whether or not a shop where a client terminal unit 1 being played is installed is a belonging shop, a restricting condition judging section 361e for judging whether or not to satisfy a restricting condition that is a condition for transmitting guidance information to the client terminal units 1, and a guidance transmitting section 361f for transmitting the guidance information to the client terminal units 1 if the restricting condition is satisfied.

## Description

### FIELD OF TECHNOLOGY

The present invention relates to a game progress administering system connected with game terminal units to be operated by players and installed in a plurality of shops via communication lines such that operation signals necessary for the progress of a game can be communicated, thereby administering the progress of the game, a game progress administering method and a computer-readable recording medium storing a game administering program.

### BACKGROUND ART

Various video game systems playable among a plurality of players have been conventionally proposed or already used. There is also known a video game system in which a plurality of video game apparatuses (game terminal units) of the same type are installed for arcade games and connected via a network (and a server) such as a LAN or Internet, so that a plurality of players can play a game (so-called massively multiplayer online playing game) in the same game space. In such a video game system, table games such as mahjong and shogi (Japanese chess) and competing-type games such as sports and martial arts (hereinafter, table games and fighting-type games are collectively called as competition games) are played.

In the case of playing the above competition game, an unspecified number of players can participate in the competition game since a plurality of video game apparatuses are connected via the network such as the LAN or Internet. In the case where strangers compete with each other in this way, since abilities of the competitors concerning the competition game cannot be known, the competition game can become unpredictable and interesting in a specific manner as compared to ordinary competition games played by means of stand-alone video game apparatuses as competitors.

On the other hand, ranking is given based on results in games, thereby raising an interest in player's results and making the game more interesting. Since an unspecified number of players can participate in a massively multiplayer online playing game as described above, there are cases where players to become competitors are unspecific.

In such cases, there have been problems that the players' interest in the ranking of the game result is reduced and the game becomes less interesting by giving ranking.

In view of the above problems, an object of the present invention is to provide a game progress administering system capable of effectively making a game more interesting by ranking game results in a massively multiplayer online playing game, a game progress administering method and a computer-readable recording medium storing a game progress administering program.

### DISCLOSURE OF THE INVENTION

In order to accomplish the above object, the present invention is directed to a game progress administering system connected with game terminal units to be operated by players and installed in a plurality of shops via communication lines such that operation signals necessary for the progress of a game can be communicated, thereby administering the progress of the game, comprising: player information storage means for storing player identification information, which is identification information of players, in correspondence with shop identification information, which is identification information of shops to which the players virtually belong; terminal information storage means for storing terminal identification information, which is identification information of the game terminal units, in correspondence with the shop identification information of the shops where the game terminal units are installed; gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information; result tabulating means for tabulating the results of the players for each shop, to which the players virtually belong, at every interval of a specified period to determine a within-shop ranking, and storing the determined within-shop ranking in the player information storage means in correspondence with the player identification information; shop judging means for reading the shop identification information corresponding to the terminal identification information of the one game terminal unit from the terminal information storage means, reading the shop identification information corresponding to the player identification information received by the gaming evaluating means from the player information storage means, and judging whether or not the read two pieces of shop identification information coincide with each other; restricting condition judging means for judging whether or not to satisfy a first restricting condition that the two pieces of shop identification information were judged to coincide by the shop judging means and that a within-shop rank order corresponding to the player identification information received from the one game terminal unit by the gaming evaluating means is within a first specified rank order; and guidance transmitting means for transmitting guidance information including the player identification information and the within-shop ranking information of the player of the one game terminal unit to other game terminal units in the shop where the one game terminal unit is installed in order to display, on the other game terminal units, guidance to the effect that the player within the first specified rank order in the within-shop ranking will start the game if the first restricting condition is judged to be satisfied by the restricting condition judging means.

According to this system, the player identification information that is the identification information of the players is stored in the player information storage means in correspondence with the shop identification information that is the identification information of the shops to which the players virtually belong, and the terminal identification information that is the identification information of the game terminal units is stored in the terminal information storage means in correspondence with the shop identification information of the shops where the game terminal units are installed.

When the gaming evaluating means receives the terminal identification information of the one game terminal unit, the player identification information and the game start signal, which is the operation signal to the effect of starting the game, from the one game terminal unit, the one game terminal unit is instructed to conduct the game and the result of each player is calculated based on the result of the game and stored in the player information storage means in correspondence with the player identification information.

Further, the result tabulating means tabulates the results of the players for each shop to which the players belong at every interval of the specified period to determine the within-shop ranking, and stores the determined within-shop ranking in the player information storage means in correspondence with the player identification information. Then, the shop judging means reads the shop identification information corresponding to the terminal identification information of the one game terminal unit from the terminal information storage means and the shop identification information corresponding to the player identification information received by the gaming evaluating means from the player information storage means, and judges whether or not the two read pieces of shop identification information coincide with each other.

Further, the restricting condition judging means judges whether or not to satisfy the first restricting condition that the two pieces of shop identification information were judged to coincide by the shop judging means and that the within-shop rank order corresponding to the player identification information received from the one game terminal unit by the gaming evaluating means is within the first specified rank order.

In addition, the guidance transmitting means transmits the guidance information including the player identification information and the within-shop ranking information of the player of the one game terminal unit to the other game terminal units in the shop where the one game terminal unit is installed in order to display, on the other game terminal units, the guidance to the effect that the player within the first specified rank order in the within-shop ranking will start the game if the first restricting condition is judged to be satisfied by the restricting condition judging means.

Specifically, if the shop identification information corresponding to the player identification information and the one corresponding to the terminal identification information are judged to coincide and the within-shop rank order corresponding to the player identification information received from the one game terminal unit is within the first specified rank order, the guidance information including the player identification information and the within-shop ranking information of the player of the one game terminal unit are transmitted to the other game terminal units in the shop where the one game terminal unit is installed in order to display, on the other game terminal units, the guidance to the effect that the player within the first specified rank order in the within-shop ranking will start the game.

The guidance to the effect that the player within the first specified rank order in the within-shop ranking will start the game is displayed on the other game terminal units in the shop in the case where the player within the first specified rank order in the within-shop ranking will start the game. Thus, the players playing by means of the other game terminal units can confirm that the player virtually belonging to this shop and being within the first specified rank order in the within-shop ranking will start the game in this shop.

Accordingly, the players playing by means of the other game terminal units in the shop where the one game terminal unit is installed can specifically know the player virtually belonging to this shop and being within the first specified rank order (e.g. within the tenth place) in the within-shop ranking. Therefore, an interest in the within-shop ranking is increased and willingness to compete is urged, thereby effectively making the game more interesting.

Further, the player within the first specified rank order in the within-shop ranking can make such an appeal to the players playing by means of the other game terminal units in the shop that his within-shop rank order is within the first specified rank order upon starting the game in the shop to which he virtually belongs. Therefore, an interest in the within-shop ranking is increased and gambling spirit is urged, thereby effectively making the game more interesting.

The present invention is also directed to a game progress administering method using a game progress administering system connected with game terminal units to be operated by players and installed in a plurality of shops via communication lines such that operation signals necessary for the progress of a game can be communicated, thereby administering the progress of the game, comprising, a step in which player information storage means of the game administering system stores player identification information, which is identification information of players, in correspondence with shop identification information, which is identification information of shops to which the players virtually belong; a step in which terminal information storage means of the game administering system stores terminal identification information, which is identification information of the game terminal units, in correspondence with the shop identification information of the shops where the game terminal units are installed; a step in which gaming evaluating means of the game administering system receives the terminal identification information of one game terminal unit, the player identification information and a game start signal, which is an operation signal to the effect of starting the game, from the one game terminal unit, instructs the one game terminal unit to conduct the game, calculating a result of each player based on the result of the game, and stores the calculated results in the player information storage means in correspondence with the player identification information; a step in which result tabulating means of the game administering system tabulates the results of the players for each shop, to which the players virtually belong, at every interval of a specified period to determine a within-shop ranking, and stores the determined within-shop ranking in the player information storage means in correspondence with the player identification information; a step in which shop judging means of the game administering system reads the shop identification information corresponding to the terminal identification information of the one game terminal unit from the terminal information storage means, reads the shop identification information corresponding to the player identification information received by the gaming evaluating means from the player information storage means, and judges whether or not the read two pieces of shop identification information coincide with each other; a step in which restricting condition judging means of the game administering system judges whether or not to satisfy a first restricting condition that the two pieces of shop identification information were judged to coincide by the shop judging means and that a within-shop rank order corresponding to the player identification information received from the one game terminal unit by the gaming evaluating means is within a first specified rank order; and a step in which guidance transmitting means of the game administering system transmits guidance information including the player identification information and the within-shop ranking information of the player of the one game terminal unit to other game terminal units in the shop where the one game terminal unit is installed in order to display, on the other game terminal units, guidance to the effect that the player within the first specified rank order in the within-shop ranking will start the game if the first restricting condition is judged to be satisfied by the restricting condition judging means.

According to this method, the player identification information that is the identification information of the players is stored in the player information storage means in correspondence with the shop identification information that is the identification information of the shops to which the players virtually belong, and the terminal identification information that is the identification information of the game terminal units is stored in the terminal information storage means in correspondence with the shop identification information of the shops where the game terminal units are installed.

When the gaming evaluating means receives the terminal identification information of the one game terminal unit, the player identification information and the game start signal, which is the operation signal to the effect of starting the game, from the one game terminal unit, the one game terminal unit is instructed to conduct the game and the result of each player is calculated based on the result of the game and stored in the player information storage means in correspondence with the player identification information.

Further, the result tabulating means tabulates the results of the players for each shop to which the players belong to at every interval of the specified period to determine the within-shop ranking, and stores the determined within-shop ranking in the player information storage means in correspondence with the player identification information. Then, the shop judging means reads the shop identification information corresponding to the terminal identification information of the one game terminal unit from the terminal information storage means and the shop identification information corresponding to the player identification information received by the gaming evaluating means from the player information storage means, and judges whether or not the two read pieces of shop identification information coincide with each other.

Further, the restricting condition judging means judges whether or not to satisfy the first restricting condition that the two pieces of shop identification information were judged to coincide by the shop judging means and that the within-shop rank order corresponding to the player identification information received from the one game terminal unit by the gaming evaluating means is within the first specified rank order.

In addition, the guidance transmitting means transmits the guidance information including the player identification information and the within-shop ranking information of the player of the one game terminal unit to the other game terminal units in the shop where the one game terminal unit is installed in order to display, on the other game terminal units, the guidance to the effect that the player within the first specified rank order in the within-shop ranking will start the game if the first restricting condition is judged to be satisfied by the restricting condition judging means.

Specifically, if the shop identification information corresponding to the player identification information and the one corresponding to the terminal identification information are judged to coincide and the within-shop rank order corresponding to the player identification information received from the one game terminal unit is within the first specified rank order, the guidance information including the player identification information and the within-shop ranking information of the player of the one game terminal unit are transmitted to the other game terminal units in the shop where the one game terminal unit is installed in order to display, on the other game terminal units, the guidance to the effect that the player within the first specified rank order in the within-shop ranking will start the game.

The guidance to the effect that the player within the first specified rank order in the within-shop ranking will start the game is displayed on the other game terminal units in the shop in the case where the player within the first specified rank order in the within-shop ranking will start the game. Thus, the players playing by means of the other game terminal units can confirm that the player virtually belonging to this shop and being within the first specified rank order in the within-shop ranking will start the game in this shop.

Accordingly, the players playing by means of the other game terminal units in the shop where the one game terminal unit is installed can specifically know the player virtually belonging to this shop and being within the first specified rank order (e.g. within the tenth place) in the within-shop ranking. Therefore, an interest in the within-shop ranking is increased and willingness to compete is urged, thereby effectively making the game more interesting.

Further, the player within the first specified rank order in the within-shop ranking can make such an appeal to the players playing by means of the other game terminal units in the shop that his within-shop rank order is within the first specified rank order upon starting the game in the shop to which he virtually belongs. Therefore, an interest in the within-shop ranking is increased and gambling spirit is urged, thereby effectively making the game more interesting.

The present invention is further directed to a computer-readable recording medium storing a game progress administering program for a game progress administering system connected with game terminal units to be operated by players and installed in a plurality of shops via communication lines such that operation signals necessary for the progress of a game can be communicated, thereby administering the progress of the game, the game progress administering program causing the game progress administering system to function as player information storage means for storing player identification information, which is identification information of players, in correspondence with shop identification information, which is identification information of shops to which the players virtually belong; terminal information storage means for storing terminal identification information, which is identification information of the game terminal units, in correspondence with the shop identification information of the shops where the game terminal units are installed; gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information; result tabulating means for tabulating the results of the players for each shop, to which the players virtually belong, at every interval of a specified period to determine a within-shop ranking, and storing the determined within-shop ranking in the player information storage means in correspondence with the player identification information; shop judging means for reading the shop identification information corresponding to the terminal identification information of the one game terminal unit from the terminal information storage means, reading the shop identification information corresponding to the player identification information received by the gaming evaluating means from the player information storage means, and judging whether or not the read two pieces of shop identification information coincide with each other; restricting condition judging means for judging whether or not to satisfy a first restricting condition that the two pieces of shop identification information were judged to coincide by the shop judging means and that a within-shop rank order corresponding to the player identification information received from the one game terminal unit by the gaming evaluating means is within a first specified rank order; and guidance transmitting means for transmitting guidance information including the player identification information and the within-shop ranking information of the player of the one game terminal unit to other game terminal units in the shop where the one game terminal unit is installed in order to display, on the other game terminal units, guidance to the effect that the player within the first specified rank order in the within-shop ranking will start the game if the first restricting condition is judged to be satisfied by the restricting condition judging means.

According to this program, the player identification information that is the identification information of the players is stored in the player information storage means in correspondence with the shop identification information that is the identification information of the shops to which the players virtually belong, and the terminal identification information that is the identification information of the game terminal units is stored in the terminal information storage means in correspondence with the shop identification information of the shops where the game terminal units are installed.

When the gaming evaluating means receives the terminal identification information of the one game terminal unit, the player identification information and the game start signal, which is the operation signal to the effect of starting the game, from the one game terminal unit, the one game terminal unit is instructed to conduct the game and the result of each player is calculated based on the result of the game and stored in the player information storage means in correspondence with the player identification information.

Further, the result tabulating means tabulates the results of the players for each shop to which the players belong to at every interval of the specified period to determine the within-shop ranking, and stores the determined within-shop ranking in the player information storage means in correspondence with the player identification information. Then, the shop judging means reads the shop identification information corresponding to the terminal identification information of the one game terminal unit from the terminal information storage means and the shop identification information corresponding to the player identification information received by the gaming evaluating means from the player information storage means, and judges whether or not the two read pieces of shop identification information coincide with each other.

Further, the restricting condition judging means judges whether or not to satisfy the first restricting condition that the two pieces of shop identification information were judged to coincide by the shop judging means and that the within-shop rank order corresponding to the player identification information received from the one game terminal unit by the gaming evaluating means is within the first specified rank order.

In addition, the guidance transmitting means transmits the guidance information including the player identification information and the within-shop ranking information of the player of the one game terminal unit to the other game terminal units in the shop where the one game terminal unit is installed in order to display, on the other game terminal units, the guidance to the effect that the player within the first specified rank order in the within-shop ranking will start the game if the first restricting condition is judged to be satisfied by the restricting condition judging means.

Specifically, if the shop identification information corresponding to the player identification information and the one corresponding to the terminal identification information are judged to coincide and the within-shop rank order corresponding to the player identification information received from the one game terminal unit is within the first specified rank order, the guidance information including the player identification information and the within-shop ranking information of the player of the one game terminal unit are transmitted to the other game terminal units in the shop where the one game terminal unit is installed in order to display, on the other game terminal units, the guidance to the effect that the player within the first specified rank order in the within-shop ranking will start the game.

The guidance to the effect that the player within the first specified rank order in the within-shop ranking will start the game is displayed on the other game terminal units in the shop in the case where the player within the first specified rank order in the within-shop ranking will start the game. Thus, the players playing by means of the other game terminal units can confirm that the player virtually belonging to this shop and being within the first specified rank order in the within-shop ranking will start the game in this shop.

Accordingly, the players playing by means of the other game terminal units in the shop where the one game terminal unit is installed can specifically know the player virtually belonging to this shop and being within the first specified rank order (e.g. within the tenth place) in the within-shop ranking. Therefore, an interest in the within-shop ranking is increased and willingness to compete is urged, thereby effectively making the game more interesting.

Further, the player within the first specified rank order in the within-shop ranking can make such an appeal to the players playing by means of the other game terminal units in the shop that his within-shop rank order is within the first specified rank order upon starting the game in the shop to which he virtually belongs. Therefore, an interest in the within-shop ranking is increased and gambling spirit is urged, thereby effectively making the game more interesting.

### BRIEF DESCRIPTION OF THE DRAWINGS

FIG. 1 is a construction diagram showing a game system to which a game progress administering system according to the invention is applied;
FIG. 2 is a perspective view showing an external appearance of a client terminal unit;
FIG. 3 is a hardware construction diagram showing the client terminal unit;
FIG. 4 is a diagram showing a functional construction of a control unit of the client terminal unit;
FIG. 5 is a perspective view showing an external appearance of a shop server;
FIG. 6 is a diagram showing a hardware construction of the shop server;
FIG. 7 is a diagram showing a functional construction of the shop server;
FIG. 8 is a diagram showing a hardware construction of a central server;
FIG. 9 is a diagram showing a functional construction of a control unit of the central server;
FIG. 10 is a flow chart showing an operations of the central server;
FIG. 11 is a detailed flow chart showing a result tabulation processing carried out in Step S101 of the flow chart shown in FIG. 10;
FIG. 12 is a detailed flow chart showing a within-shop ranking guidance processing carried out in Step S111 of the flow chart shown in FIG. 10;
FIG. 13 is a detailed flow chart showing a within-area ranking guidance processing carried out in Step S113 of the flow chart shown in FIG. 10;
FIG. 14 is a detailed flow chart showing a within-ranking guidance processing carried out in Step S115 of the flow chart shown in FIG. 10;
FIG. 15 is a flow chart (first half) showing a flow of operations of the client terminal unit;
FIG. 16 is a flow chart (second half) showing a flow of operations of the client terminal unit;
FIG. 17 is a flow chart showing a guidance display processing occurring by an interrupt signal in the client terminal unit;
FIG. 18 is a diagram showing a belonging-shop setting screen displayed in Steps S611 and S615 of the flow chart shown in FIG. 15;
FIG. 19 is a diagram showing a belonging-shop result display screen displayed in Step S623 of the flow chart shown in FIG. 16;
FIG. 20 is a diagram showing a within-shop result display screen displayed in Step S623 of the flow chart shown in FIG. 16;
FIG. 21 is a diagram showing a VIP display screen displayed in Step S629 of the flow chart shown in FIG. 16;
FIG. 22 is a diagram showing a participation receiving screen displayed in Step S631 of the flow chart shown in FIG. 16;
FIG. 23 is a diagram showing a competitor display screen displayed in Step S637 of the flow chart shown in FIG. 16;
FIG. 24 is a diagram showing a competition screen displayed in Step S639 of the flow chart shown in FIG. 16;
FIG. 25 is a diagram showing a competition result display screen displayed in Step S647 of the flow chart shown in FIG. 16;
FIG. 26 is a flow chart showing a flow of operations of the shop server;
FIG. 27 is a diagram showing a previous-month within-shop ranking screen displayed in Step S807 of the flow chart shown in FIG. 26;
FIG. 28 is a diagram showing a present-month within-shop ranking screen displayed in Step S809 of the flow chart shown in FIG. 26;
FIG. 29 is a diagram showing a previous-month shop ranking screen displayed in Step S815 of the flow chart shown in FIG. 26;
FIG. 30 is a diagram showing a present-month shop ranking screen displayed in Step S817 of the flow chart shown in FIG. 26; and
FIG. 31 is a diagram showing a guidance display screen displayed in response to an interrupt signal.

### BEST MODES FOR CARRYING OUT THE INVENTION

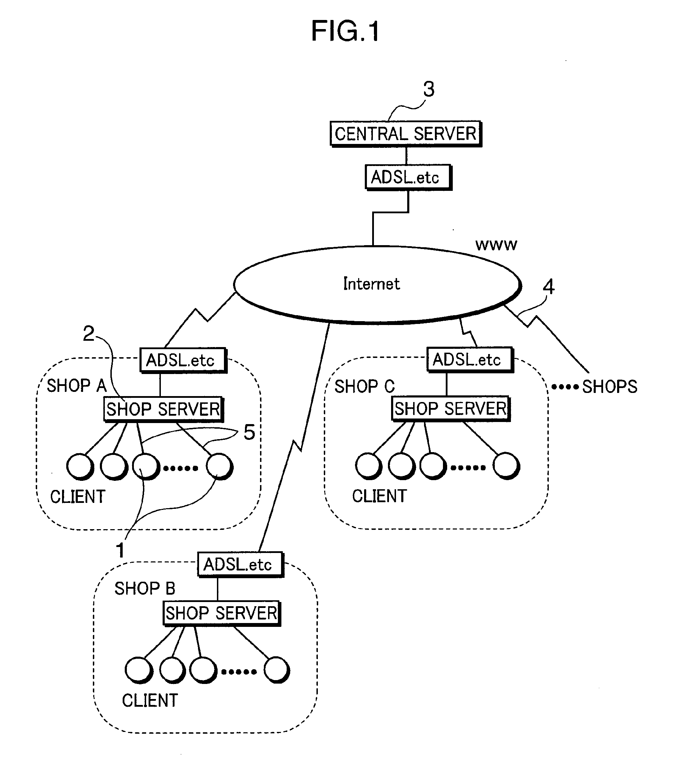

FIG. 1 is a construction diagram showing a game apparatus to which a game progress administering system of the invention is applied. The game system is provided with client terminal units (corresponding to game terminal units) 1 assigned with corresponding identification information, shop servers 2 (corresponding to shop monitor units) assigned with corresponding identification information and each communicably connected with a plurality of (eight in this example) client terminal units 1 via special lines 5, a central server 3 (corresponding to the game progress administering system) communicably connected with a plurality of shop servers 2 via communication lines 4 to administer a game played by a plurality of players by means of the client terminal units 1. It should be noted that the shop servers 2 are communicably connected with each other via the communication lines 4.

Each client terminal unit 1 receives specified operations a player carries out while referring to game screens displayed on a monitor, and proceeds with a game in accordance with instruction information transmitted from the corresponding shop server 2 (or central server 3) and operation signals from the other client terminal units 1.

Each shop server 2 is communicably connected with a plurality of (eight in this example) client terminal units 1 and the central server 3, transmits and receives data to and from the client terminal units 1 and the central server 3, and generates simulation operation signals necessary for the progress of the game and transmits it to the client terminal units 1 upon detecting the communication line 4 incapable of communication.

The central server 3 are so connected with the client terminal units 1 operable by players as to be able to communicate operation signals necessary for the progress of the game with each other via the communication lines 4 (and the shop servers 2), administers the progress of a competition game, and stores characteristic data of players' fingerprints necessary for fingerprint authentication to be described later as player information in correspondence with user IDs.

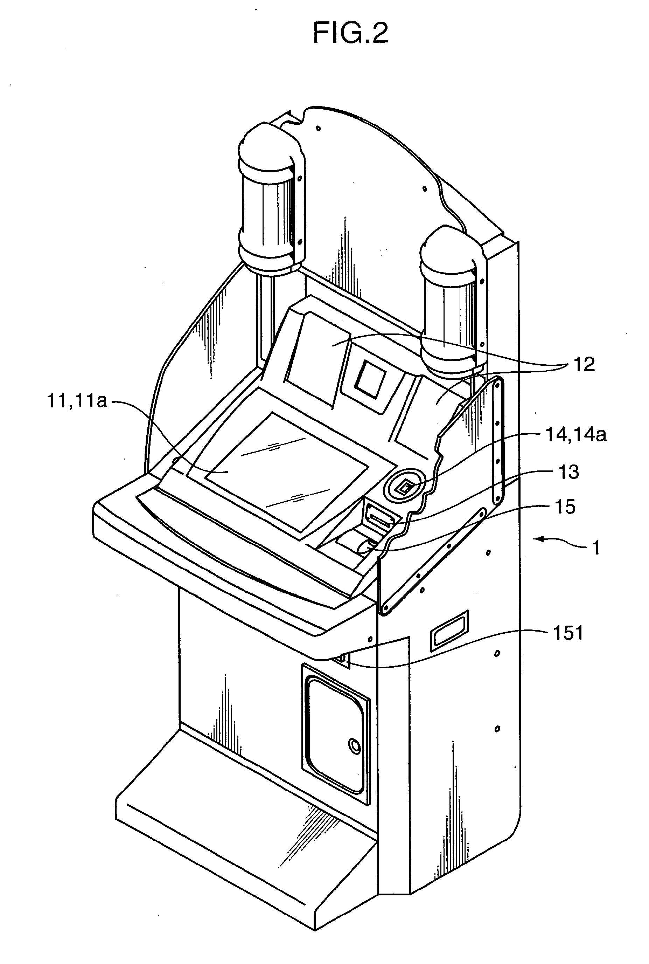

FIG. 2 is a perspective view showing the external appearance of one embodiment of the client terminal unit 1. In the following description, a video game apparatus for business use integrally constructed with a monitor is described as one example of the client terminal unit.

In this embodiment, a competition game played by means of the client terminal units 1 according to the present invention is a mahjong game simulating mahjong and made up of a specified number of (here, four) players, wherein the player operating each client terminal unit 1 competes with those operating the other client terminal units 1 or CPU players. In the case of competing with the players operating the other client terminal units 1, data are transmitted and received between the client terminal units 1 via network communicators 18 to be described later, the shop servers 2 and the central server 3, etc. and information concerning game progress states are saved in the shop servers 2.

Each client terminal unit 1 is provided with a monitor 11 for displaying game screens, a touch panel 11a for judging which button has been pressed to instruct based on an address of a button displayed on a game screen of the monitor 11 to urge the selection or the like and a position pressed by the player, a loudspeaker 12 for outputting sounds, a card reader 13 for reading information such as the user ID stored in an individual card, a fingerprint authenticating device 14 for extracting characteristic data necessary for the authentication of an individual using fingerprint information from a CCD camera 14a to be described later, and a coin receiving device 15 for receiving coins inserted by the player. The characteristic data extracted by the fingerprint authenticating device 14 is saved in a player information 362a of the central server 3 to be described later via the network communicator 18, the shop server 2 to be described later, etc.

The monitor 11 is, for example, a thin liquid crystal display for displaying images. The loudspeaker 12 is for outputting specified messages and BGMs. The fingerprint authenticating device 14 includes the CCD camera 14a for picking up images of a player's fingerprint. Instead of the CCD camera 14a, another digital image pickup apparatus (e.g. CMOS camera) may be used. The coin receiving device 15 is provided with a coin outlet 151 to which the coin is discharged in the case where the inserted coil is a defective coin or the like.

The individual card is a magnetic card, an IC card or the like in which individual information such as a user ID is stored. Although not shown, the card reader 13 is for enabling the readout of the individual information from the inserted individual card.

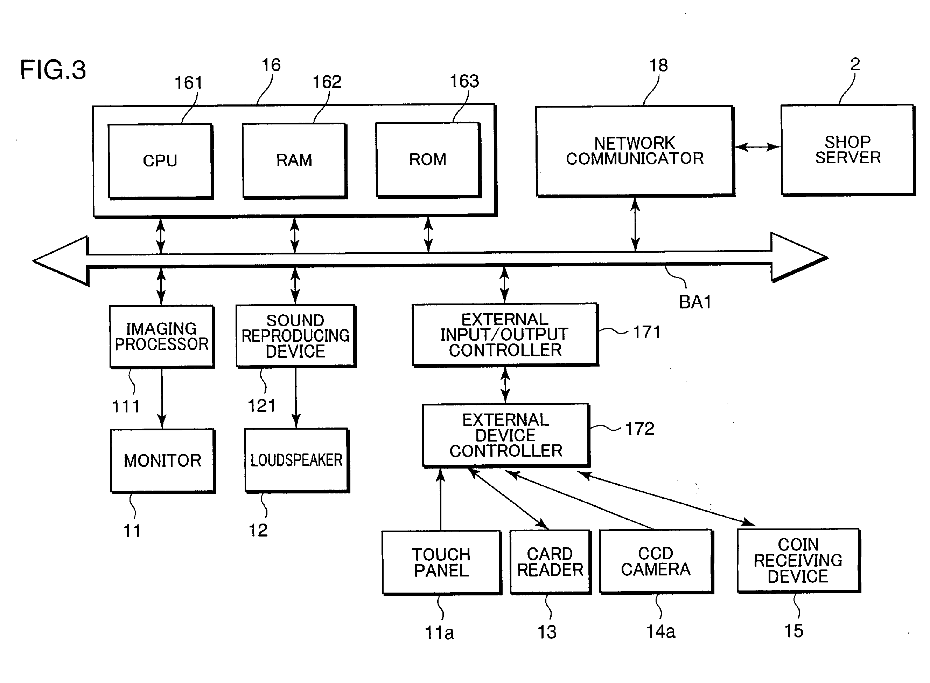

A control unit 16 (see FIG. 3) including a microcomputer for receiving detection signals from the respective devices and outputting control signals to the respective devices is provided at a specified position of the client terminal unit 1.

FIG. 3 is a hardware construction diagram showing one embodiment of the client terminal unit 1. The control unit 16 is for controlling the overall operation of the client terminal unit 1, and includes an information processor (CPU) 161, a RAM 162 for temporarily saving information and the like obtained during processings, and a ROM 163 storing specified image information, a game program and the like to be described later.

An external input/output controller 171 converts the detection signals into digital signals to be used for the processings between the control unit 16 and detectors including the card reader 13, the touch panel 11a, the CCD camera 14a and the coin receiving device 15, and outputs command information to the respective detectors after converting it into control signals. Such signal processing and input/output processing are carried out, for example, in a time-sharing manner. An external device controller 172 outputs the control signals to the respective detectors and receives the detection signals from the respective detectors within the respective time-sharing periods.

An imaging processor 111 is for causing the monitor 11 to display a desired image in accordance with an image displaying instruction from the control unit 16 and includes a video RAM and the like. A sound reproducing device 121 is for outputting a specified message, a BGM or the like to the loudspeaker 12 in accordance with an instruction from the control unit 16.

The touch panel 11a is a rectangular thin layer element and constructed by covering an array of linear pressure-sensitive elements made of a transparent material vertically and horizontally arranged at specified intervals by a transparent cover, and is adhered to a display screen of the monitor 11. A known touch panel can be used as the touch panel 11a. The touch panel 11a is capable of judging which button has been pressed to instruct based on the address of the button to urge the selection or the like displayed on the screen of the monitor 11 and the pressed position.

Mahjong tile objects, background images, various screen images and the like are stored in the ROM 163. Each of the mahjong tile objects and the like is comprised of a necessary number of polygons so as to enable the three-dimensional imaging. The imaging processor 111 performs a calculation for the conversion from positions in a three-dimensional space to those in a simulated three-dimensional space, a light source calculation and other calculations in accordance with an imaging instruction from the CPU 161, and writes an image data to be imaged in the video RAM, for example, writes (adheres) texture data in (to) an area of the video RAM designated by polygons based on the calculation results.

Here, a relationship between the operation of the CPU 161 and that of the imaging processor 111 is described. The CPU 161 reads image data, sound data, control program data and game program data from the ROM 163 in accordance with an operating system (OS) stored in the ROM 163 which is built in or detachably mountable from the outside. Part or all of the read image data, sound data, control program data, etc. are saved in the RAM 162. Thereafter, the CPU 161 performs processings in accordance with the control program and various data (image data including polygons and textures of objects to be displayed and other character images, and sound data) saved in the RAM 162 and the detection signals and the like from the detectors.

Some data of various data stored in the ROM 163 that may be recorded on a detachable recording medium may be made readable by a driver such as a hard disk drive, an optical disk drive, a flexible disk drive, a silicon disk drive, or a cassette medium reader. In such a case, the recording medium is, for example, a hard disk, an optical disk, a flexible disk, a CD, a DVD or a semiconductor memory.

The network communicator 18 is for transmitting and receiving various pieces of event information occurring during the execution of the mahjong game to and from the central server 3 via the network, the shop server 2, etc.

Here, an individual authentication method in each client terminal unit 1 is described. The individual authentication is for confirming that an actual player is identical with a player recognized by the client terminal unit 1 (or central server 3 connected via the network communicator 18 and the network). In the case where a player plays by means of the client terminal unit 1 for the first time, user ID data (identification information) is read from an inserted individual card by the card reader 13, an image of the player's fingerprint is picked up by the CCD camera 14a of the fingerprint authenticating device 14, and characteristic data necessary for the individual authentication is extracted by the fingerprint authenticating device 14 using the fingerprint information from the CCD camera 14a. The user ID data and the characteristic data are transmitted to the shop server 2 connected via the network communicator 18 and the network and transmitted from the shop server 2 to the central server 3 via the communication line to be stored in the player information storage 362a to be described later. In this way, the player is registered in the central server 3.

In the case where a player already registered in the central server 3 plays by means of the client terminal unit 1, user ID data is read from an inserted individual card by the card reader 13, an image of the player's fingerprint is picked up by the CCD camera 14a of the fingerprint authenticating device 14, and characteristic data necessary for the individual authentication is extracted by the fingerprint authenticating device 14 using the fingerprint information from the CCD camera 14a. Then, the user ID data and the characteristic data are transmitted to the central server 3 connected via the network communicator 18, the network, the shop server 2 and the like, and the central server 3 judges as to whether or not the characteristic data corresponding to the user ID stored in the player information storage 362a to be described later is identical with the received characteristic data. The player is permitted to play if the judgment result is affirmative while being refused to play if the judgment result is negative (for example, an error message is displayed on the monitor 11 of the client terminal unit 1 to urge the player to conduct the fingerprint authentication again).

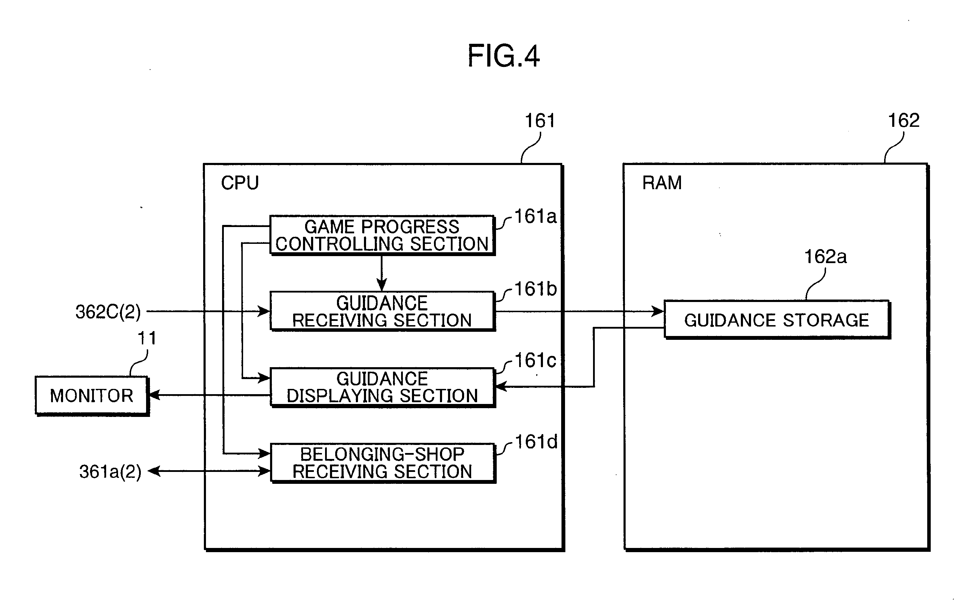

FIG. 4 is a functional construction diagram showing the control unit 16 of the client terminal unit 1. The CPU 161 of the control unit 16 is provided with a game progress controlling section 161a for receiving an operation from the player and controlling the progress of the game in accordance with an instruction from the central server 3 and the mahjong rules, a guidance receiving section 161b for receiving guidance information from the central server 3, a guidance displaying section 161c for displaying the received guidance information, and a belonging-shop receiving section 161d for receiving a shop to which the player virtually belongs. Further, the RAM 162 of the control unit 16 is provided with a guidance storage 162a for storing the guidance information.

The game progress controlling section 161a is for receiving an operation from the player by means of the touch panel 11a and the like and controlling the progress of the game in accordance with instructions from the central server 3 (or the shop server 2) and the mahjong rules. The game progress controlling section 161a also reads the user ID (corresponding to the player identification information) from the individual card for the aforementioned individual authentication and transmits it to the central server 3 in correspondence with terminal identification information that is identification information of the client terminal unit 1.

The guidance receiving section 161b receives the guidance information from the central server 3 via the shop server 2, and saves the received guidance information in the guidance storage 162a. The guidance receiving section 161b also receives a player result and a shop result of the previous month from a guidance transmitting section 361e to be described later if the user ID is transmitted to the central server 3 by the game progress controlling section 161a and the last date of gaming is judged to be in the previous month by a gamin evaluating section 361b of the central server 3 to be described later.

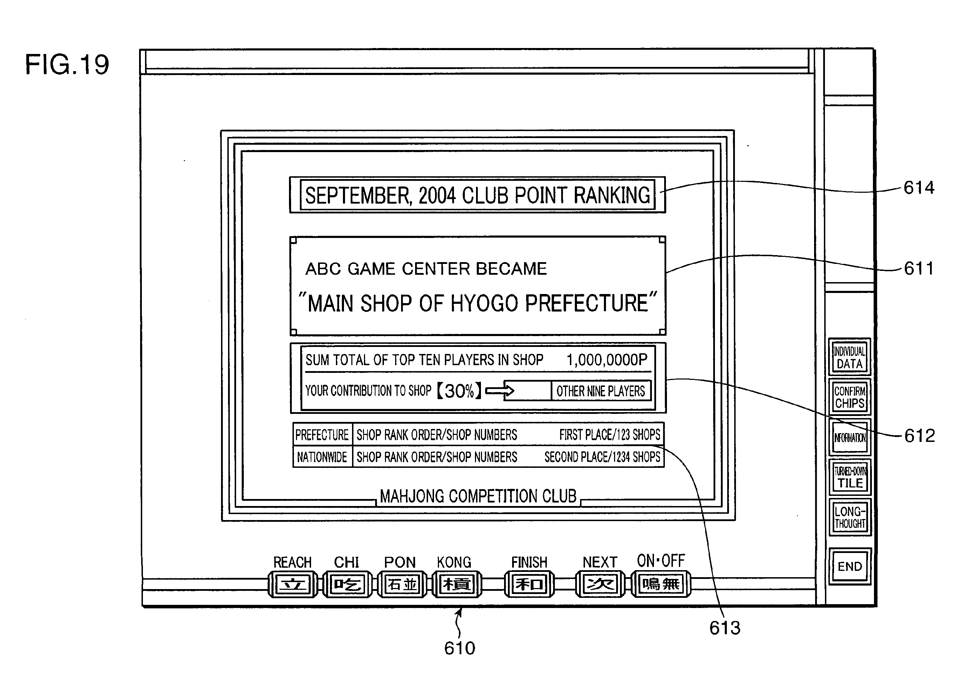

The guidance displaying section 161c reads the guidance information received by the guidance receiving section 161b from the guidance storage 162a and displays it on the monitor 11. It should be noted that a display method including a display position on the screen is set beforehand in accordance with the kind of the guidance information as described later (see FIGS. 19 to 24).

The belonging-shop receiving portion 161d receives shop identification information corresponding to the terminal identification information transmitted to the central server 3 by the game progress controlling section 161a (shop identification information of a shop where the client terminal unit 1 corresponding to the terminal identification information is installed) from the central server 3, receives an operation from a player via the touch panel 11a, and transmits setting instruction information to the effect that the shop, to which the player virtually belongs, is set (registered or changed) to a shop where the client terminal unit 1 being presently played is installed to the central server 3 (belonging-shop setting section 361a to be described later).

The guidance storage 162a is for temporarily saving the guidance information received by the guidance receiving section 161b. The guidance information saved in the guidance storage 162a may be erased after being displayed on the monitor 11 by the guidance displaying section 161c or may be erased after the lapse of a predetermined period (e.g. one month). In the latter case, the guidance information is preferably saved while being classified according to the kind of guidance, etc.

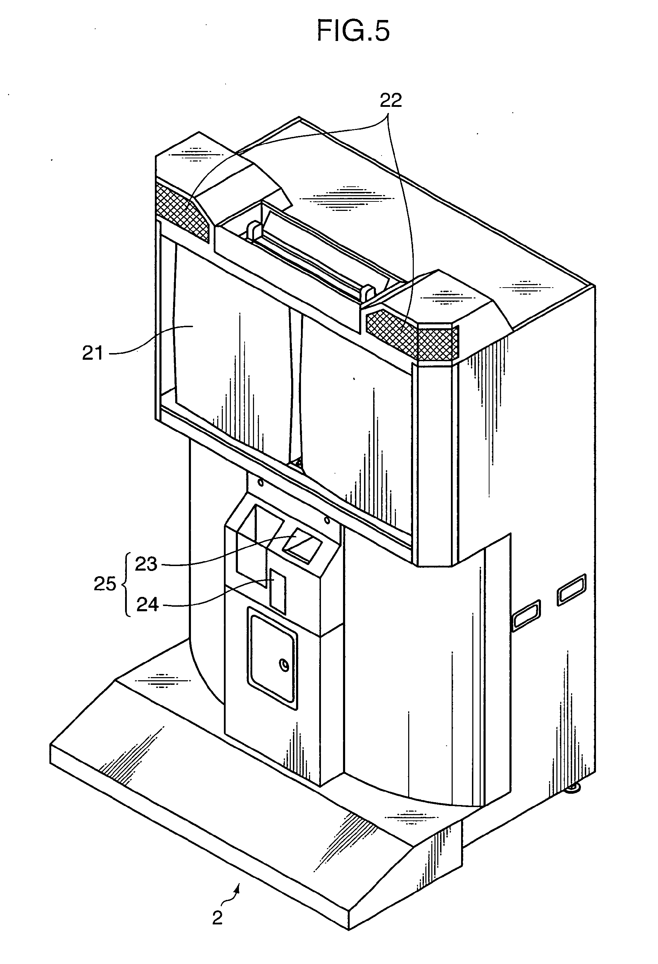

FIG. 5 is a perspective view showing the external appearance of one embodiment of the shop server 2. The shop server 2 is provided with a monitor 21 for displaying a ranking screen to be described later and the like, a loudspeaker 22 for outputting sounds, and an individual-card vending machine 25 for selling an individual card upon receiving coins inserted by a player.

The monitor 21 has, for example, two CRTs for the purpose of largely displaying images. The two CRTs are disposed such that longer sides of a substantially rectangular screen displaying portions for displaying the respective images abut on each other, and image signals are so controlled as to display one image on the two image displaying portions.

The loudspeaker 22 is for outputting specified messages and BGMs. The individual-card vending machine 25 includes a coin receiving portion 24 for receiving coins inserted by the player, and a card discharging portion 23 for discharging an individual card. It should be noted that the coin receiving portion 24 is equipped with a coin outlet (not shown) for discharging a coin if the inserted coin is a defective coin or the like.

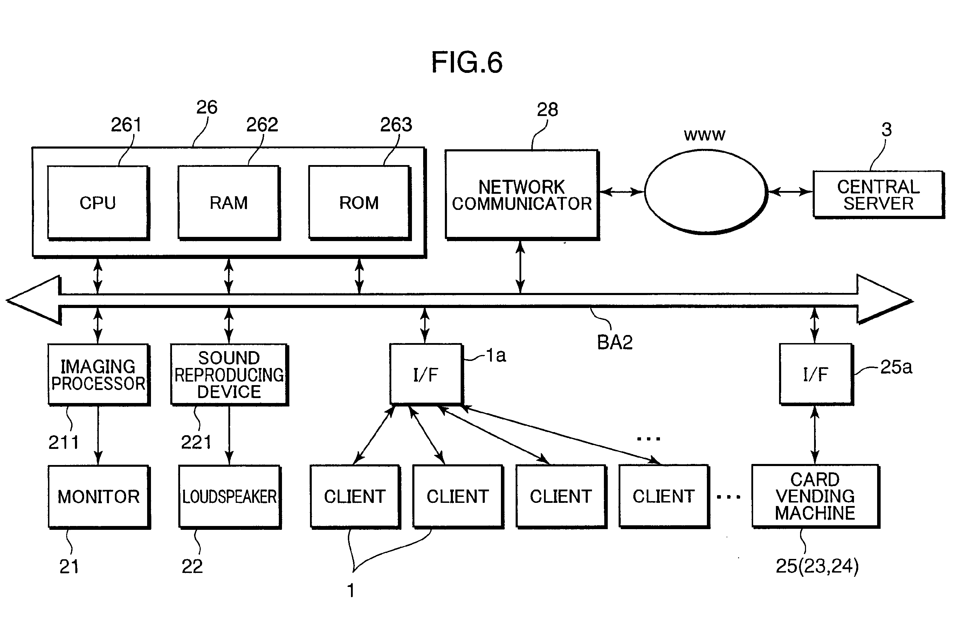

A control unit 26 (see FIG. 6) comprised of a microcomputer and the like for receiving detection signals from the respective devices and outputting control signals to the respective devices is installed at a specified position of the shop server 2.

FIG. 6 is a hardware construction diagram showing one embodiment of the shop server 2. The control unit 26 is for controlling the overall operation of the shop server 2 and is provided with an information processor (CPU) 261, a RAM 262 for temporarily saving information and the like obtained during processings, and a ROM 263 storing specified image information and the like.

An image processor 211 is for causing the monitor 21 to display a necessary image in accordance with an image displaying instruction from the control unit 26 and includes a video RAM and the like. A sound reproducing device 221 is for outputting a specified message or a BGM in accordance with an instruction from the control unit 26.

Some data of various data stored in the ROM 263 that may be recorded on a detachable recording medium may be made readable by a driver such as a hard disk drive, an optical disk drive, a flexible disk drive, a silicon disk drive, or a cassette medium reader. In such a case, the recording medium is, for example, a hard disk, an optical disk, a flexible disk, a CD, a DVD or a semiconductor memory.

A network communicator 28 is for transmitting and receiving various data to and from the central server 3 and the other shop servers 2 via a network such as WWW. An interface 1a is for transferring data among a plurality of (e.g. eight) client terminal units 1 connected with the shop server 2.

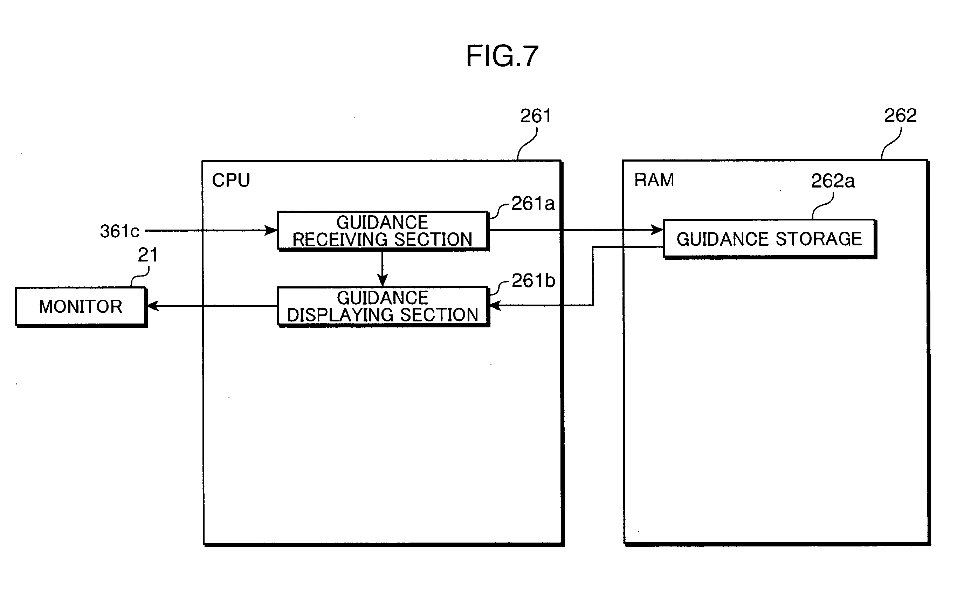

FIG. 7 is a functional construction diagram showing the control unit 26 of the shop server 2. The RAM 262 of the control unit 26 is provided with a guidance receiving section 261a for receiving the guidance information from the central server 3 and a guidance displaying section 261b for displaying the received guidance information on the monitor 11. The RAM 262 of the control unit 26 is provided with a guidance storage 262a for saving the guidance information.

The guidance receiving section 261a receives the guidance information and ranking information from the central server 3 and saves the received guidance information and the ranking information in the guidance storage 262a.

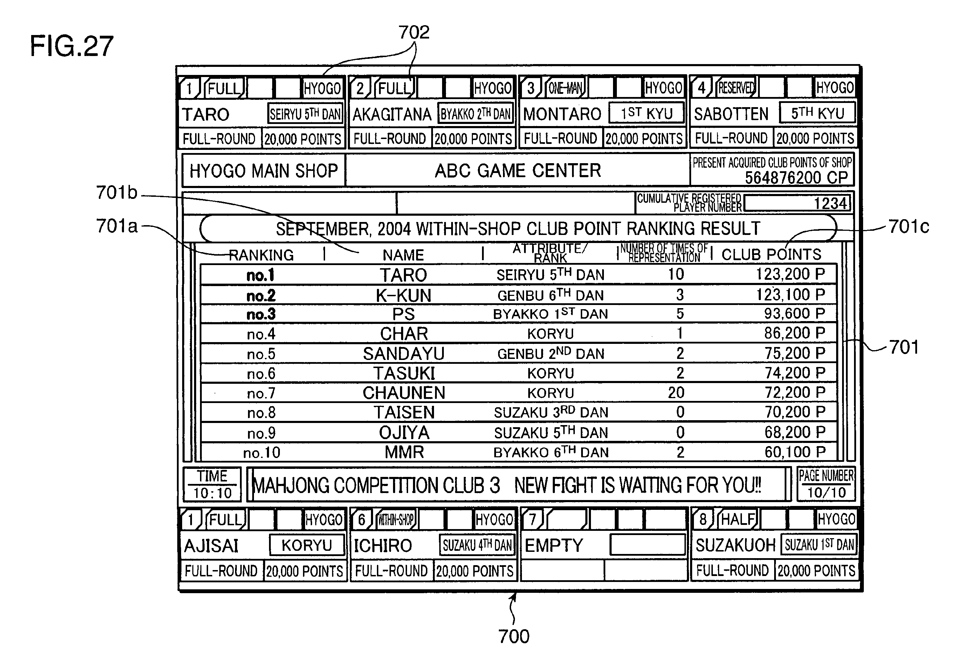

The guidance displaying section 261b reads the guidance information and the ranking information received by the guidance receiving section 261a from the guidance storage 162a and causes the monitor 21 to display them. As described later, the display method such as the displayed position on the screen is set beforehand in accordance with the kind of the guidance information (see, FIGS. 27 to 31).

The guidance storage 262a is for temporarily saving the guidance information and the ranking information received by the guidance receiving section 261a. The guidance information saved in the guidance storage 262a may be erased after being displayed on the monitor 21 by the guidance displaying section 261b or may be erased after the lapse of a predetermined period (e.g. one month). In the latter case, the guidance information is preferably saved while being classified according to the kind of guidance, etc. However, out of pieces of ranking information, previous-month ranking information to be described later is preferably saved at least for one month.

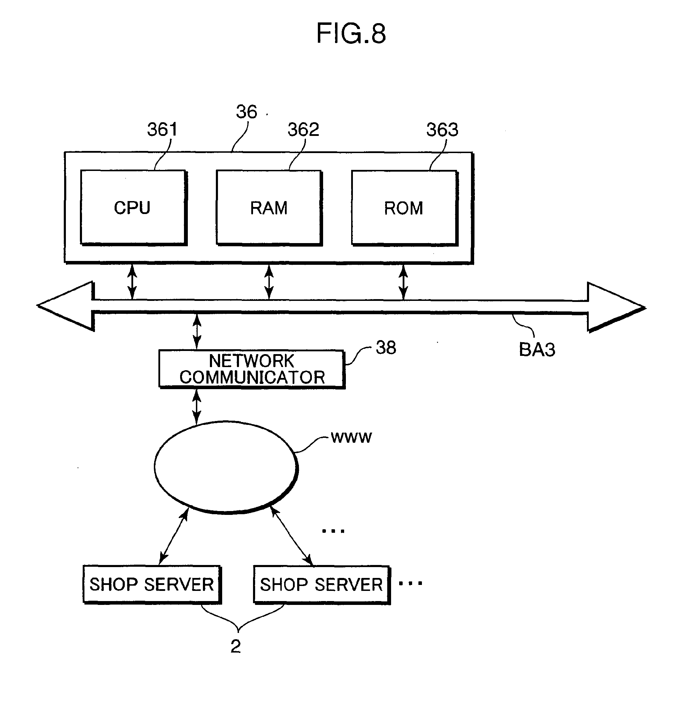

FIG. 8 is a hardware construction diagram showing one embodiment of the central server 3. A control unit 36 is for controlling the overall operation of the central server 3, and is provided with an information processor (CPU) 361, a RAM 362 for temporarily saving information and the like obtained during processings, and a ROM 363 storing specified image information and the like.

Some data of various data stored in the ROM 363 that may be recorded on a detachable recording medium may be made readable by a driver such as a hard disk drive, an optical disk drive, a flexible disk drive, a silicon disk drive, or a cassette medium reader. In such a case, the recording medium is, for example, a hard disk, an optical disk, a flexible disk, a CD, a DVD or a semiconductor memory.

A network communicator 38 is for transmitting and receiving various data to and from a plurality of shop servers 2 via a network such as WWW (world-wide web). The game progress administering program of the present invention is stored in the ROM 363 and loaded into the RAM 362 and the game progress administering program in the RAM 362 is successively executed by the CPU 361 to realize the respective functions.

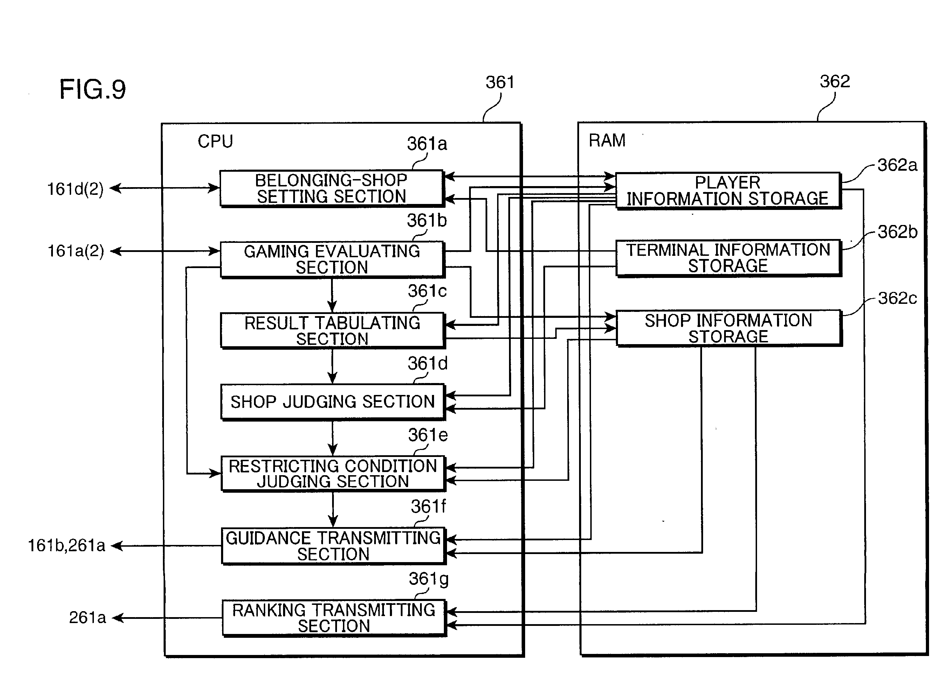

FIG. 9 is a functional construction diagram showing the control unit 36 of the central server 3. The CPU 361 of the control unit 36 is provided with the belonging-shop setting section 361a (corresponding to belonging-shop setting means) for receiving a shop, to which the player virtually belongs, from the client terminal unit 1, a gaming evaluating section 361b (corresponding to gaming evaluating means) for instructing the client terminal unit 1 to execute a game and calculating a result of each player in accordance with the result of the game, a result tabulating section 361c (corresponding to result tabulating means) for determining a within-shop ranking by tabulating the results of the players for each shop, to which the players virtually belong, at every interval of a specified period, a shop judging section 361d (corresponding to shop judging means) for judging as to whether or not the shop where the client terminal unit 1 being played is installed is the shop to which the player virtually belongs, a restricting condition judging section 361e (corresponding to restricting condition judging means) for judging as to whether or not to satisfy a restricting condition, which is a condition for transmitting the guidance information to the client terminal unit 1 (or the shop server 2), a guidance transmitting section 361f (corresponding to guidance transmitting means) for transmitting the guidance information to the client terminal unit 1 (or the shop server 2) if the restricting condition is satisfied, and a ranking transmitting section 361g (corresponding to ranking transmitting means) for transmitting the ranking information to the shop server 2.

The RAM 362 of the control unit 36 includes the player information storage 362a (corresponding to player information storage means) for saving player identification information, which is the identification information of the player, in correspondence with the shop identification information, which is the identification information of the shop to which the player virtually belongs, a terminal storage 362b (corresponding to terminal storage means) for saving the terminal identification information, which is the identification information of the client terminal unit 1 in accordance with the shop identification information, which is the identification information of the client terminal unit 1, and a shop information storage 362c (corresponding to shop information storage means) for saving the shop identification information, which is the identification information of the shop, in correspondence with area identification information, which is the identification information of an area where the shop is located.

When the gaming evaluating section 361b receives the terminal identification information from the client terminal unit 1 (hereinafter, the client terminal unit 1 received by the gaming evaluating section 361b is referred to as client terminal unit 1A to be distinguished from the other client terminal units 1), the belonging-shop setting section 361a reads the shop identification information corresponding to the terminal identification information of the client terminal unit 1A from the terminal storage 362b, transmits the shop identification information to the client terminal unit 1A, receives belonging-shop setting information to the effect of setting to virtually belong to the shop corresponding to the shop identification information from the client terminal unit 1A (belonging-shop receiving section 161d), and saves the shop identification information in the player information storage 362a in correspondence with the player identification information of the client terminal unit 1.

The gaming evaluating section 361b receives the terminal identification information of the client terminal unit 1A, the player identification information, a game start signal, which is an operation signal to the effect of starting the competition game, from the client terminal unit 1A (game progress controlling section 161a), determines competing terminal units which are other client terminal units 1 to become competitors (hereinafter, client terminal units 1B) in accordance with a specified rule (e.g. in the order of receiving the game start signals), and instructs the client terminal unit 1A and the client terminal units 1B to execute the competition game.

The gaming evaluating section 361b also receives the result of the competition game from the client terminal unit 1A (game progress controlling section 161a), calculates a result of each player in accordance with the result of the competition game, and saves the calculated results in the player information storage 362a in correspondence with the player identification information. Here, the result of each player is calculated as points corresponding to the score of chips of the mahjong game that is the competition game.

Specifically, chips of 20000 points are virtually given to each player at the start of the game (so-called distributed initial points are 20000 points), and calculates the score obtained by subtracting 20000 points from the score of the chips at the end of the game is calculated as points. For example, +13000 (= 33000-20000) points are evaluated if the chips amount to 33000 points at the end of the game, whereas -5000(= 15000-20000) points are evaluated if the chips amount to 15000 points at the end of the game.

The result tabulating section 361c calculates accumulated points by adding up the points evaluated by the gaming evaluating section 361b, and calculates a within-shop rank order of each player, a shop rank order that is a nationwide ranking of each shop and a within-area shop rank order that is a rank order within a specified area (here, prefecture). Specifically, the result tabulating section 361c tabulates results (previous-month results) within a past predetermined period (here, one previous month) set beforehand, and calculates the within-shop ranking, the shop ranking, and within-area ranking (previous-month within-shop rankings, previous-month shop ranking and previous-month within-area shop rankings, respectively). The result tabulating section 361c also tabulates results (present-month results) within a predetermined period up to the present (here, from the first of the present month to the present) set beforehand, and calculates the within-shop rankings, the shop ranking, and within-area shop rankings (present-month within-shop rankings, present-month shop ranking and present-month within-area shop rankings, respectively).

The result tabulating section 361c calculates the previous-month within-shop rankings, previous-month shop ranking and previous-month within-area shop rankings at timings set beforehand (here, the first of each month), and calculates each of the present-month within-shop rankings, present-month shop ranking and present-month within-area shop rankings at every interval of a specified period (e.g. every 30 minutes) set beforehand. The result tabulating section 361c saves the previous-month within-shop rankings and the present-month within-shop rankings in the player information storage 362a in correspondence with the player identification information, and saves the previous-month shop ranking and previous-month within-area shop rankings and the present-month shop ranking and present-month within-area shop rankings in the shop information storage 362c in correspondence with the shop identification information.

The shop judging section 361d reads the shop identification information corresponding to the terminal identification information of the client terminal unit 1A from the terminal information storage 362b, reads the shop identification information corresponding to the player identification information received by the gaming evaluating section 361b from the player information storage 361a, and judges whether or not the read two pieces of shop identification information coincide with each other. In other words, the shop judging section 361d judges whether the shop where the client terminal unit 1A played by the player (playing shop) and the shop to which the player virtually belongs (belonging shop) coincide with each other.

The shop judging section 361d reads the shop identification information corresponding to the terminal identification information of the client terminal unit 1A from the terminal information storage 362b, reads the shop identification information corresponding to the player identification information received by the gaming evaluating section 361b from the player information storage 361a, and judges whether pieces of area identification information corresponding to the read two pieces of shop identification information coincide with each other. In other words, the shop judging section 361d judges whether the area where the shop having the client terminal unit 1A played by the player is located (playing area) and the area where the shop, to which the player virtually belongs, is located (belonging area) coincide with each other. It should be noted that areas are prefectures here.

The restricting condition judging section 361e is for judging whether or not restricting conditions A, B to be described later and first to third restricting conditions are satisfied. First, the restricting condition A is the one to the effect that "the within-shop ranking corresponding to the player identification information received by the client terminal unit 1A by the gaming evaluating section 361b is within a first specified rank order (here, within the tenth place)" and the first restricting condition is the one to the effect that "pieces of the shop identification information of the playing shop and the belonging shop are judged to coincide with each other by the shop judging section 361d and the restricting condition A is satisfied".

Further, the restricting condition B is the one to the effect that "the within-shop ranking of the player corresponding to the player identification information received by the client terminal unit 1A by the gaming evaluating section 361b is within the first specified rank order (here, within the tenth place) and the shop to which the player corresponding to the player identification information received from the client terminal unit 1A by the gaming evaluating section 361b belongs is within a specified second specified rank order (here, the first place)" and the second restricting condition is the one to the effect that pieces of the area identification information of the playing shop and the belonging shop are judged to coincide with each other by the shop judging section 361d (here, the playing area and the belonging area coincide with each other) and the restricting condition B is satisfied".

Further, the third restricting condition is the one to the effect that "the within-shop rank order of the player corresponding to the player identification information received from the client terminal unit 1A by the gaming evaluating section 361b is within the first specified rank order (here, within the tenth place) and the shop rank order of the shop to which the player corresponding to the player identification information received from the client terminal unit 1A by the gaming evaluating section 361b virtually belongs is within a third specified rank order (here, the first place)".

The guidance transmitting section 361f is for transmitting specified guidance information to the client terminal units 1 or the shop server 2 in accordance with the judgment results on the restricting conditions A, B and the first to third restricting conditions by the restricting condition judging section 361e.

First, in the case where the restricting condition judging section 361e judged that the third restricting condition is satisfied, the guidance transmitting section 361f transmits guidance information including the player identification information of the player of the client terminal unit 1A, the within-shop ranking information, the shop identification information and the shop ranking information (hereinafter, headquarter guidance information) to the client terminal units 1A' to display guidance to the effect that the player virtually belonging to the shop within the third specified rank order (here, the first place) in the shop ranking and being within the first specified rank order (herein, within the tenth place) in the within-shop ranking will start the game on the other client terminal units 1A' of the shop where the client terminal unit 1A is installed and the shop server 2A in the shop where the client terminal unit 1A is installed.

Further, in the case where the restricting condition judging section 361e judged that the third restricting condition is satisfied, when the competing terminal units (client terminal units 1B) are determined by the gaming evaluating section 361b, the guidance transmitting section 361f transmits guidance information including the player identification information of the player of the client terminal unit 1A, the within-shop ranking information, the shop identification information and the shop ranking information (i.e., headquarter guidance information) to the client terminal units 1B to display guidance to the effect that the player virtually belonging to the shop within the third specified rank order (here, the first place) in the shop ranking and being within the first specified rank order (herein, within the tenth place) in the within-shop ranking was determined as a competitor.

Subsequently, if no headquarter guidance information was transmitted, the guidance transmitting section 361f transmits guidance information including the player identification information of the player of the client terminal unit 1A, the within-shop ranking information, the shop identification information and the shop ranking information and the within-area shop ranking information (hereinafter, main-shop guidance information) to the client terminal units 1A' and the shop server 2A to display guidance to the effect that the player virtually belonging to the shop within the second specified rank order (here, the first place) in the shop ranking and being within the first specified rank order (herein, within the tenth place) in the within-shop ranking will start the game on the other client terminal units 1A' of the shop where the client terminal unit 1A is installed and the shop server 2A in the shop where the client terminal unit 1A is installed, in the case where the restricting condition judging section 361e judged the second restricting condition to be satisfied.

Further, if no headquarter guidance information was transmitted, the guidance transmitting section 361f transmits guidance information including the player identification information of the player of the client terminal unit 1A, the within-shop ranking information, the shop identification information and the shop ranking information and the within-area shop ranking information (i.e., main-shop guidance information) to the client terminal units 1B to display guidance to the effect that the player virtually belonging to the shop within the second specified rank order (here, the first place) in the within-area shop ranking and being within the first specified rank order (herein, within the tenth place) in the within-shop ranking was determined as a competitor on the client terminal units 1B, when the competing terminal units (client terminal units 1B) are determined by the gaming evaluating section 361b in the case where the restricting condition judging section 361e judged the restricting condition B to be satisfied.

If neither the headquarter guidance information nor the main-shop guidance information was transmitted, the guidance transmitting section 361f transmits guidance information including the player identification information and the within-shop ranking information of the player of the client terminal unit 1A (hereinafter, branch guidance information) to the other client terminal units 1A' and the shop server 2A in the shop where the client terminal unit 1A is installed to display guidance to the effect that the player within the first specified rank order (herein, within the tenth place) in the within-shop ranking will start the game on the other client terminal units 1A' and the shop server 2A, in the case where the restricting condition judging section 361e judged the first restricting condition to be satisfied.

Further, if neither the headquarter guidance information nor the main-shop guidance information was transmitted, the guidance transmitting section 361f transmits guidance information including the player identification information and the within-shop ranking information of the player of the client terminal unit 1A (hereinafter, branch guidance information) to the client terminal units 1B to display guidance to the effect that the player within the first specified rank order (herein, within the tenth place) in the within-shop ranking was determined as a competitor on the client terminal units 1B, when the competing terminal units (client terminal units 1B) are determined by the gaming evaluating section 361b in the case where the restricting condition judging section 361e judged the restricting condition A to be satisfied.

In the case of transmitting the guidance information to the client terminal units 1A' and the shop server 2A, the guidance transmitting section 361f transmits the guidance information while adding an interrupt signal thereto in order to make an interrupt display on the client terminal units 1A' and the shop server 2A.

The ranking transmitting section 361g reads the shop identification information and the shop ranking information from the shop information storage 362c, generates shop ranking information by sorting pieces of the shop ranking information according to the shop rank orders, and transmits the shop ranking information to the shop servers 2.

The ranking transmitting section 361g reads the shop identification information, the area identification information and the within-area shop ranking information from the shop information storage 362c, generates within-area shop ranking information (concerning shops having the same area identification information) for each area by sorting pieces of within-shop ranking information according to the within-area rank orders, and transmits the within-area shop ranking information for each area to the shop servers 2 of the shops having the corresponding area identification information.

The ranking transmitting section 361g reads the player identification information, the within-shop ranking information and the shop identification information from the player information storage 362a, generates within-shop ranking information (concerning players having the same shop identification information) for each shop by sorting pieces of within-shop ranking information according to the within-shop rank orders, and transmits the within-shop ranking information of each shop to the shop server 2 of the shop having the corresponding shop identification information.

The player information storage 362a is for saving the shop identification information of the shop to which each player virtually belongs in correspondence with the player identification information, the accumulated points calculated by the result tabulating section 361c, the within-shop ranking information and point information corresponding to past gaming date information obtained by the gaming evaluating section 361b.

The terminal storage 362b is for storing the shop identification information in correspondence with the terminal identification information that is the identification information of the client terminal units 1. Here, it is assumed that the shop identification information is stored beforehand in the terminal storage 362b in correspondence with the terminal identification information. The shop information storage 362c is for storing the within-area shop ranking information and the shop ranking information obtained by the result tabulating section 361c in correspondence with the shop identification information.

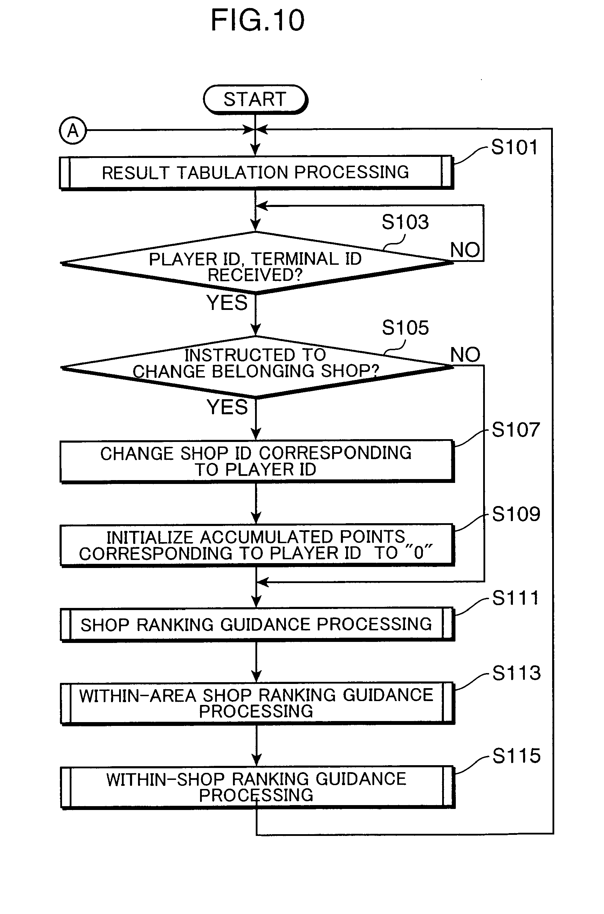

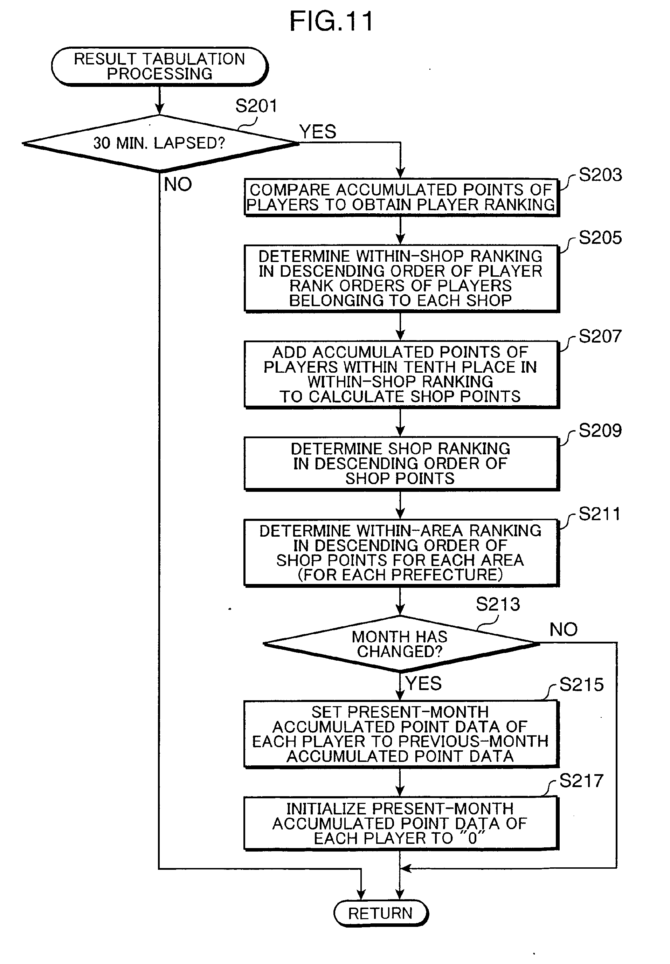

FIG. 10 is a flow chart outlining the operation of the central server 3. First, a result tabulation processing to be described with reference to FIG. 11 is carried out by the result tabulating section 361c (Step S101). Then, the belonging shop setting section 361a judges whether or not the player identification information (player ID) and the terminal identification information (terminal ID) have been received from the client terminal unit 1A (Step S103). If these pieces of information are judged not to have been received (NO in Step S103), this routine enters a standby state. If these pieces of information are judged to have been received (YES in Step S103), the belonging-shop setting section 361a judges whether or not an instruction signal to the effect of setting the belonging shop has been received from the client terminal unit 1A (Step S105).

This routine proceeds to Step S111 if no instruction signal has been received (NO in Step S105). The belonging-shop setting section 361a reads the shop ID corresponding to the terminal ID received in Step S103 from the terminal storage 362b and replaces the shop ID stored in the player information storage 362a by the read shop IF (Step S107) if the instruction signal has been received (YES in Step S105). Then, the accumulated points saved in the player information storage 362a are initialized to "0" (Step S109).

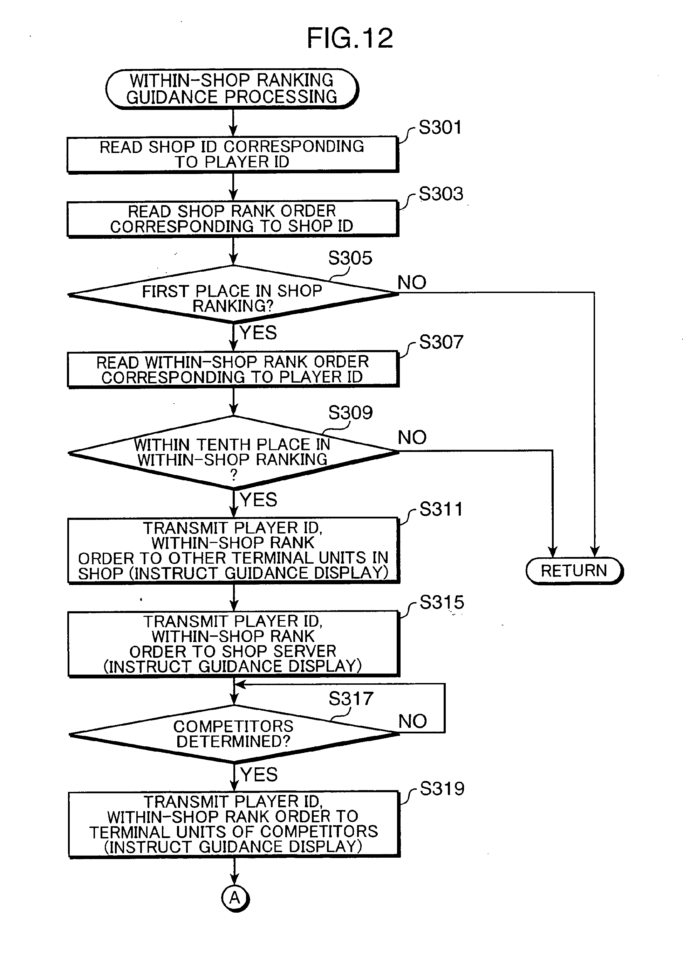

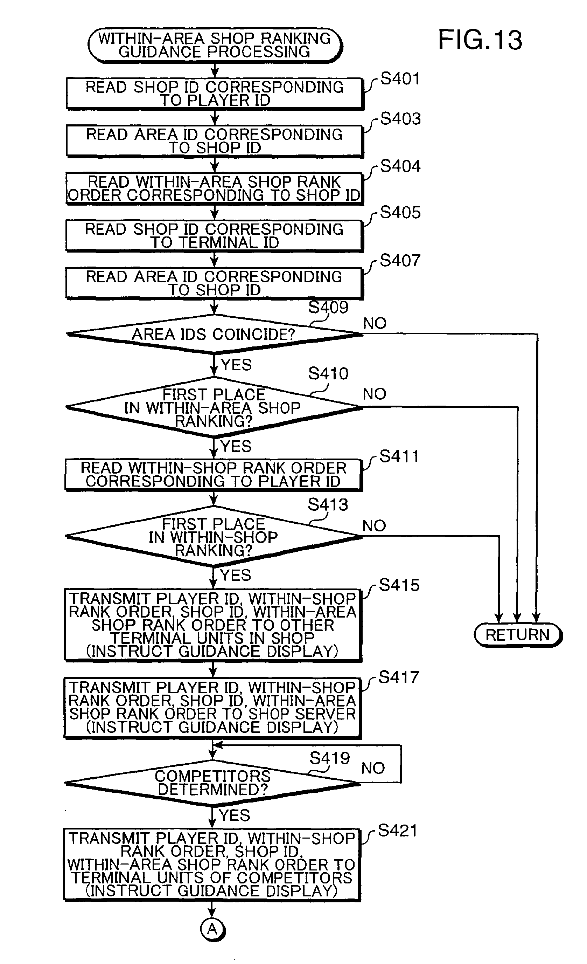

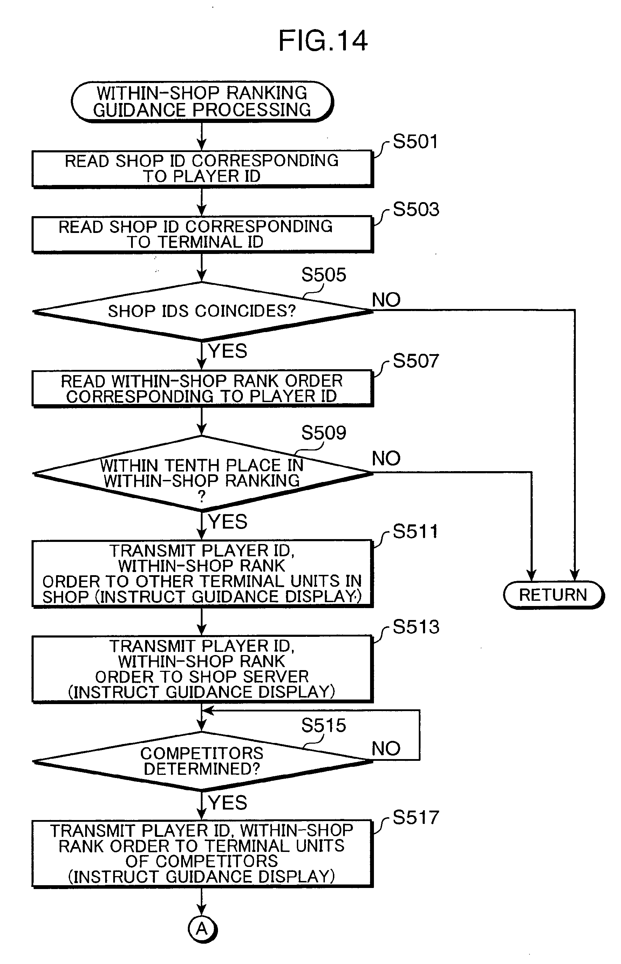

If the judgment result in Step S105 is negative or if the processing in Step S109 is completed, a shop ranking guidance processing to be described later with reference to FIG. 12 is carried out (Step S111). Then, a within-area shop ranking guidance processing to be described later with reference to FIG. 13 is carried out (Step S113), and a within-shop ranking guidance processing to be described with reference to FIG. 14 is carried out (Step S115). Thereafter, this routine returns to Step S101 to repeat the processings of Step S101 to Step S115.

FIG. 11 is a detailed flow chart showing the result tabulation processing carried out in Step S101 of the flow chart shown in FIG. 10. It should be noted that the following operations are all carried out by the result tabulating section 361c. First, it is judged whether or not a predetermined time (here, 30 minutes) has lapsed after operations in Steps S203 to S211 were carried out last time (Step S201). If it is judged that 30 minutes have not yet lapsed (NO in Step S207), this subroutine returns. If it is judged that 30 minutes have lapsed (YES in Step S207), the accumulated points of the respective players are compared to obtain player rank orders (Step S203).

Out of the players virtually belonging to the shop, the within-shop ranking is determined in the descending order of the player rank orders obtained in Step S203 for each shop (with reference to the shop IDs of the players saved in the player information storage 362a), and are saved in the player information storage 362a in correspondence with the player IDs (Step S205). Subsequently, the accumulated points of the players within the tenth place in the within-shop ranking are added to obtain shop points for each shop (Step S207).

Subsequently, the shop ranking is determined in the descending order of the shop points obtained in Step S207 and saved in the shop information storage 362c in correspondence with the shop IDs (Step S209). Then, the within-area shop ranking is determined in the descending order of the shop points for each area (with reference to the area identification information of the shops saved in the shop information storage 362c) and saved in the shop information storage 362c in correspondence with the shop IDs (Step S211).

Then, present date information is read from a clock (not shown in FIG. 8) built in the control unit 36 to judge whether or not month has changed (Step S213). This subroutine returns if the month is judged not to have been changed (NO in Step S213). If the month is judged to have been changed, previous-month rank orders and previous-month cumulative points, which are results of the previous month are rewritten by the respective players' present-month rank orders and present-month cumulative points, which are results of the present month, saved in the player information storage 362a, and previous-month rank orders and previous-month within-area shop rank orders of the respective shops saved in the shop information storage 362c are rewritten by present-month rank orders and present-month within-area shop rank orders of the respective shops (Step S215). Then, present-month cumulative point data of the respective players are initialized to "0" (Step S217) and this subroutine returns.

FIG. 12 is a detailed flow chart showing a ranking guidance processing carried out in Step S111 of the flow chart shown in FIG. 10. First, the restricting condition judging section 361e reads the shop ID corresponding to the player ID from the player information storage 362a (Step S301). Then, the restricting condition judging section 361e reads the shop rank order corresponding to the shop ID from the shop information storage 362c (Step S303). Subsequently, the restricting condition judging section 361e judges whether or not the shop rank order is the first place (Step S305).

If the shop rank order is judged not to be the first place (NO in Step S305), this subroutine returns. If the shop rank order is judged to be the first place (YES in Step S305), the restricting condition judging section 361e reads the within-shop rank order corresponding to the player ID from the player information storage (Step S307). Then, the restricting condition judging section 361e judges whether or not the within-shop rank order is within the tenth place (first place to tenth place) (Step S309).

If the within-shop rank order is judged not to be within the tenth place (eleventh place or lower) (NO in Step S309), this subroutine returns. If the within-shop rank order is judged to be within the tenth place (YES in Step S309), the guidance transmitting section 361f transmits the player ID, the within-shop rank order, the shop ID and the shop rank order (first place) to the other terminal units (client terminal units 1A') within the shop while adding an interrupt signal thereto (Step S311). The guidance transmitting section 361f transmits the player ID, the within-shop rank order, the shop ID and the shop rank order (first place) (i.e. headquarter guidance information) to the shop server 2A in the shop while having an interrupt signal added thereto (Step S315).

Subsequently, the restricting condition judging section 361e judges whether the gaming evaluating section 361b has determined the client terminal units 1B to become competitors (Step S317). If the client terminal units 1B are judged not to have been determined (NO in Step S317), this subroutine enters s standby state. If the client terminal units 1B are judged to have been determined (YES in Step S317), the guidance transmitting section 361f transmits the player ID, the within-shop rank order, the shop ID and the shop rank order (first place) (i.e. headquarter guidance information) to the client terminal units 1B (Step S319), and this subroutine returns to Step S101 of the flow chart shown in FIG. 10 to carry out the processings of Step S101 and the succeeding steps.

FIG. 13 is a detailed flow chart showing the within-area ranking guidance processing carried out in Step S113 of the flow chart shown in FIG. 10. First, the shop judging section 361d reads the shop ID corresponding to the player ID from the player information storage 362a (Step S401) and reads the area ID corresponding to the read shop ID from the shop information storage 362c (Step S403). Subsequently, the restricting condition judging section 361e reads the within-area shop rank order corresponding to the shop ID read in Step S403 from the shop information storage 362c (Step S410). Then, the shop judging section 361d reads the shop ID corresponding to the terminal ID from the terminal information storage 362b (Step S405), and reads the area ID corresponding to the read shop ID from the shop information storage 362c (Step S407).

Subsequently, the shop judging section 361d judges whether or not the area ID read in Step S403 and the area ID read in Step S407 coincide with each other (Step S409). If these area IDs are judged not to coincide (NO in Step S409), this subroutine returns. If these area IDs are judged to coincide (YES in Step S409), whether or not the within-area shop rank order read in Step S404 is the first place is judged (Step S410). If the within-area shop rank order is judged not to be the first place (second place or lower) (NO in Step S410), this subroutine returns.

If the within-area shop rank order is judged to be the first place (YES in Step S410), the restricting condition judging section 361e reads the within-shop rank order corresponding to the player ID from the player information storage 362a (Step S411). Then, the restricting condition judging section 361e judges whether or not the within-shop rank order is within the tenth place (first place to tenth place) (Step S413).

If the within-shop rank order is judged not to be within the tenth place (eleventh place or lower) (NO in Step S413), this subroutine returns. If the within-shop rank order is judged to be within the tenth place (YES in Step S413), the guidance transmitting section 361f transmits the player ID, the within-shop rank order, the shop ID and the within-area shop rank order to the other terminal units in the shop (client terminal units 1A') while adding an interrupt signal thereto (Step S415). Then, the guidance transmitting section 361f transmits the player ID, the within-shop rank order, the shop ID and the within-area shop rank order (first place) (i.e. main-shop guidance information) to the shop sever 2A in the shop while adding an interrupt signal thereto (Step S417).

Subsequently, the restricting condition judging section 361e judges whether or not the gaming evaluating section 361b has determined the client terminal units 1B to become competitors (Step S419). If the client terminal units 1B are judged not to have been determined (NO in Step S419), this subroutine enters s standby state. If the client terminal units 1B are judged to have been determined (YES in Step S419), the guidance transmitting section 361f transmits the player ID, the within-shop rank order, the shop ID and the shop rank order (first place) (i.e. main-shop guidance information) to the client terminal units 1B (Step S412), and this subroutine returns to Step S101 of the flow chart shown in FIG. 10 to carry out the processings of Step S101 and the succeeding steps.

FIG. 14 is a detailed flow chart showing the within-ranking guidance process carried out in Step S115 of the flow chart shown in FIG. 10. First, the shop judging section 361d reads the shop ID corresponding to the player ID from the player information storage 362a (Step S501) and reads the shop ID corresponding to the terminal ID from the terminal information storage 362b (Step S503). Then, the shop judging section 361d judges whether or not the shop ID read in Step S501 and the shop ID read in Step S503 coincide with each other (Step S505).

If these shop IDs are judged not to coincide (NO in Step S505), this subroutine returns. If these shop IDs are judged to coincide (YES in Step S505), the restricting condition judging section 361e reads the within-shop rank order corresponding to the player ID is read from the player information storage 362a (Step S507). Then, the restricting condition judging section 361e judges whether or not the within-shop rank order is within the tenth place (first place to tenth place) (Step S509).

If the within-shop rank order is judged not to be within the tenth place (eleventh place or lower) (NO in Step S509), this subroutine returns. If the within-shop rank order is judged to be within the tenth place (YES in Step S509), the guidance transmitting section 361f transmits the player ID and the within-shop rank order to the other terminal units in the shop (client terminal units 1A') while adding an interrupt signal thereto (Step S511). Then, the guidance transmitting section 361f transmits the player ID and the within-shop rank order (i.e. branch guidance information) to the shop sever 2A in the shop while adding an interrupt signal thereto (Step S513).

Subsequently, the restricting condition judging section 361e judges whether or not the gaming evaluating section 361b has determined the client terminal units 1B to become competitors (Step S515). If the client terminal units 1B are judged not to have been determined (NO in Step S515), this subroutine enters s standby state. If the client terminal units 1B are judged to have been determined (YES in Step S515), the guidance transmitting section 361f transmits the player ID and the within-shop rank order (i.e. branch guidance information) to the client terminal units 1B (Step S517), and this subroutine returns to Step S101 of the flow chart shown in FIG. 10 to carry out the processings of Step S101 and the succeeding steps.

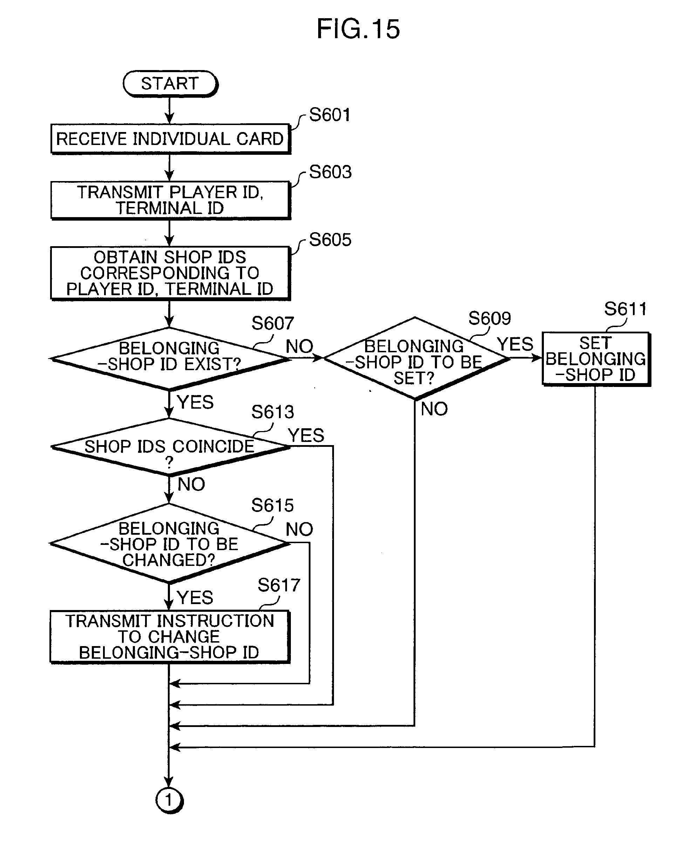

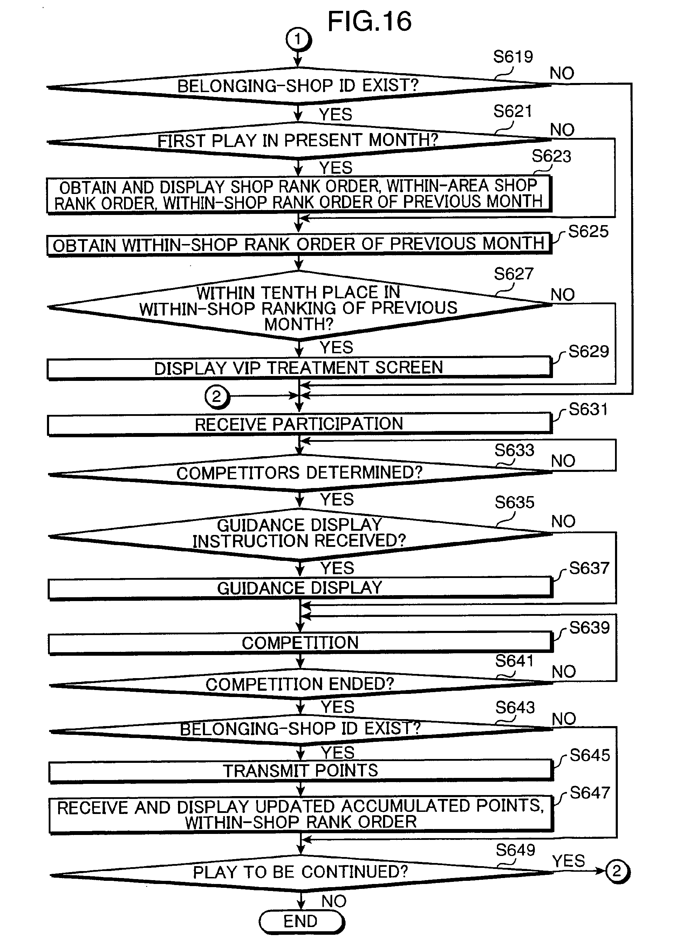

FIGS. 15 and 16 are a flow chart showing the operation of the client terminal unit 1. Unless otherwise specified, the following process is carried out by the game progress controlling section 161a. First, the individual information such as the player ID (user ID) data is read from the inserted individual card by the card reader 13 (Step S601), and the player ID and the terminal ID assigned to the client terminal unit 1 are transmitted to the central server 3 (Step S603). Then, the belonging-shop receiving section 161d obtains the shop IDs corresponding to the player ID and the terminal ID from the central server 3 (Step S605).

Subsequently, the belonging-shop receiving section 161d judges whether or not the belonging shop ID, which is the shop ID corresponding to the player ID, is present (stored in the player information storage 362a of the central server 3) (Step S607). If the belonging shop ID is judged to be absent (NO in Step S607), the belonging-shop receiving section 161d judges whether or not the belonging shop ID is set to the shop ID corresponding to the terminal ID through an operation of the player by means of the touch panel 11a (Step S609). If it is judged not to set the belonging shop ID to the shop ID (NO in Step S609), this subroutine proceeds to Step S619. If it is judged to set the belonging shop ID to the shop ID (YES in Step S609), an instruction signal to the effect of setting the belonging shop ID to the shop ID corresponding to the terminal ID is transmitted to the central server 3 (Step S611) and this subroutine proceeds to Step S619.

If the judgment result in Step S607 is affirmative, the belonging-shop receiving section 161d judges whether or not the shop IDs corresponding to the player ID and the terminal ID coincide with each other (Step S613). If these shop IDs are judged to coincide (YES in Step S613), this subroutine proceeds to Step S619. If these shop IDs are judged not to coincide (NO in Step S613), the belonging-shop receiving section 161d judges whether or not the belonging shop ID is set to the shop ID corresponding to the terminal ID through an operation of the player by means of the touch panel 11a (Step S615). If it is judged not to set the belonging shop ID to the shop ID (NO in Step S615), this subroutine proceeds to Step S619. If it is judged to set the belonging shop ID to the shop ID (YES in Step S615), an instruction signal to the effect of setting the belonging shop ID to the shop ID corresponding to the terminal ID is transmitted to the central server 3 (Step S617) and this subroutine proceeds to Step S619.

If the judgment result in Step S609 is negative, the one in Step S613 is affirmative or the one in Step S615 is negative or if the operation in Step S611 or S617 is completed, the belonging-shop receiving section 161d judges whether or not the belonging shop ID, which is the shop ID corresponding to the player ID, is present (stored in the player information storage 362a of the central server 3) (Step S619). If the belonging shop ID is judged to be absent (NO in Step S619), this subroutine proceeds to Step S631. If the belonging shop ID is judged to be present (YES in Step S619), a past gaming date is obtained from the player information storage 362a and whether or not the game to be played this time is the first game in the present month (the last playing date and the playing date this time are in different months) is judged using the last gaming date and the present date (Step S621).

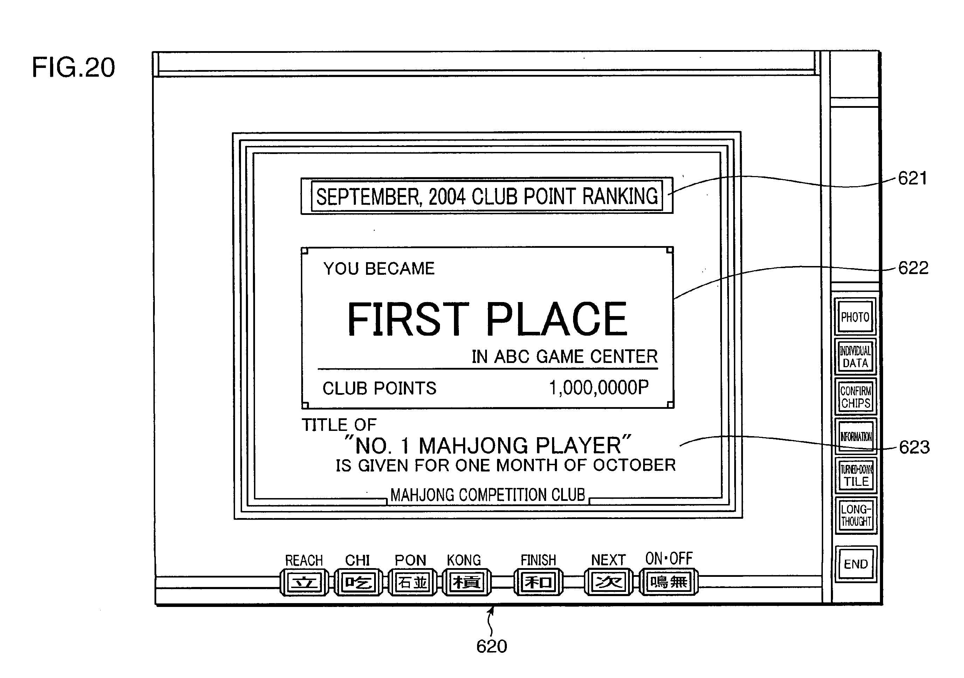

If the game to be played this time is judged not to be the first one in the present month (NO in Step S621), this subroutine proceeds to Step S625. If it is judged to be the first one in the present month (YES in Step S621), the shop rank order, the within-area shop rank order and the within-shop rank order of the previous month are obtained from the central server 3 and displayed on the monitor 11 (Step S623) (see FIGS. 19 and 20). If the judgment result in Step S621 is negative or if the operation in Step S623 is completed, the within-shop rank order of the previous month is obtained from the central server 3 (Step S625) and judgment is made as to whether or not the within-shop rank order of the previous month is within the tenth place (Step S627). If the within-shop rank order is judged not to be within the tenth place (eleventh place or lower) (NO in Step S627), this subroutine proceeds to Step S631. If the within-shop rank order is judged to be within the tenth place (YES in Step S627), a VIP treatment screen is displayed on the monitor 11 to honor the within-shop rank order of the tenth place or higher (Step S629).

If the judgment result in Step S619 is negative or the one in Step S627 is negative or the operation in Step S629 is completed, participation in the competition game is received through an operation of the player by means of the touch panel 11a and information to the effect that the player is participating is transmitted to the central server 3 (Step 5631). Then, whether or not information to the effect that competitors were determined has been received from the central server 3 is judged (Step S633). If the information to the effect that the competitors were determined has not been received (NO in Step S633), this subroutine enters a standby state. If the information to the effect that the competitors were determined has been received (YES in Step S633), the guidance receiving section 161b judges whether or not instruction information instructing the guidance display concerning the competitors has been received from the central server 3 (Step S635).

If the instruction information instructing the guidance display has not been received (NO in Step S635), this subroutine proceeds to Step S639. If the instruction information instructing the guidance display has been received (YES in Step S635), the guidance displaying section 161c causes guidance concerning the competitors to be displayed (Step S637). If the judgment result in Step S635 is negative or the operation in Step S637 is completed, the competition game is conducted (Step S639). Then, whether or not the competition game has been ended is judged (Step S641). If the competition game is judged not to have been ended (NO in Step S641), this subroutine returns to Step S639 to continue the competition game.

If the competition game is judged to have been ended (YES in Step S641), whether or not the belonging shop ID, which is the shop ID corresponding to the player ID, is present is judged (Step S643). If the belonging shop ID is judged to be absent (NO in Step S643), this subroutine proceeds to Step S649. If the belonging shop ID is judged to be present (YES in Step S643), points corresponding to the game result are transmitted to the central server 3 (Step S645) and accumulated points after the update are received from the central server 3 and displayed on the monitor 11 (Step S647). If the judgment result in Step S643 is negative or the operation in Step S647 is completed, judgment is made as to whether or not to continue to play through an operation of the player by means of the touch panel 11a (Step S649). If it is judged to continue to play (YES in Step S649), this subroutine returns to Step S631 to repeat the operations in Steps S631 to S647. If it is judged not to continue to play (NO in Step S649), this subroutine is ended.

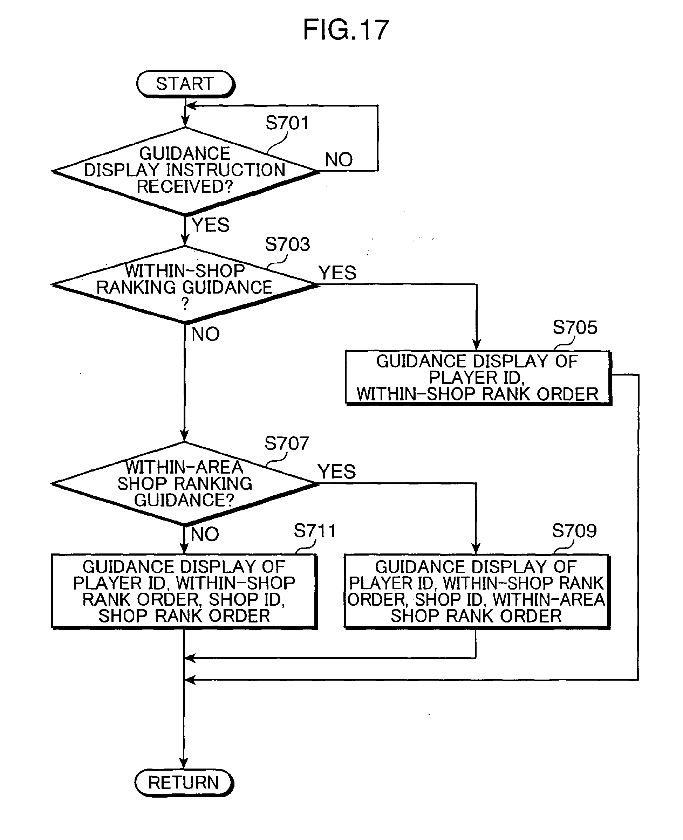

FIG. 17 is one example of the guidance display processing that occurs in response to an interrupt signal in the client terminal unit 1. First, the guidance receiving section 161b judges whether or not any guidance information has been received (Step S701). If no guidance information is judged to have been received (NO in Step S701), this routine enters a standby state. If the guidance information is judged to have been received (YES in Step S701), the guidance displaying section 161c judges whether or not the guidance information received in Step S701 is the guidance information by the within-ranking guidance processing shown in FIG. 12 (= branch guidance information) (Step S703).

If it is judged to be the branch guidance information (YES in Step S703), the guidance displaying section 161c causes the player ID and the within-shop rank order to be displayed as guidance (Step S705) and this routine returns. If it is judged not to be the branch guidance information (NO in Step S703), the guidance displaying section 161c judges whether or not the guidance information received in Step S701 is the guidance information by the within-area ranking guidance processing shown in FIG. 13 (= main-shop guidance information) (Step S707).

If it is judged to be the main-shop guidance information (YES in Step S707), the guidance displaying section 161c causes the player ID, the within-shop rank order, the shop ID and the within-area shop rank order (first place) to be displayed as guidance (Step S709) and this routine returns. If it is judged not to be the main-shop guidance information (i.e. headquarter guidance information) (NO in Step S707), the guidance displaying section 161c causes the player ID, the within-shop rank order, the shop ID and the shop rank order (first place) to be displayed as guidance (Step S711) and this routine returns.

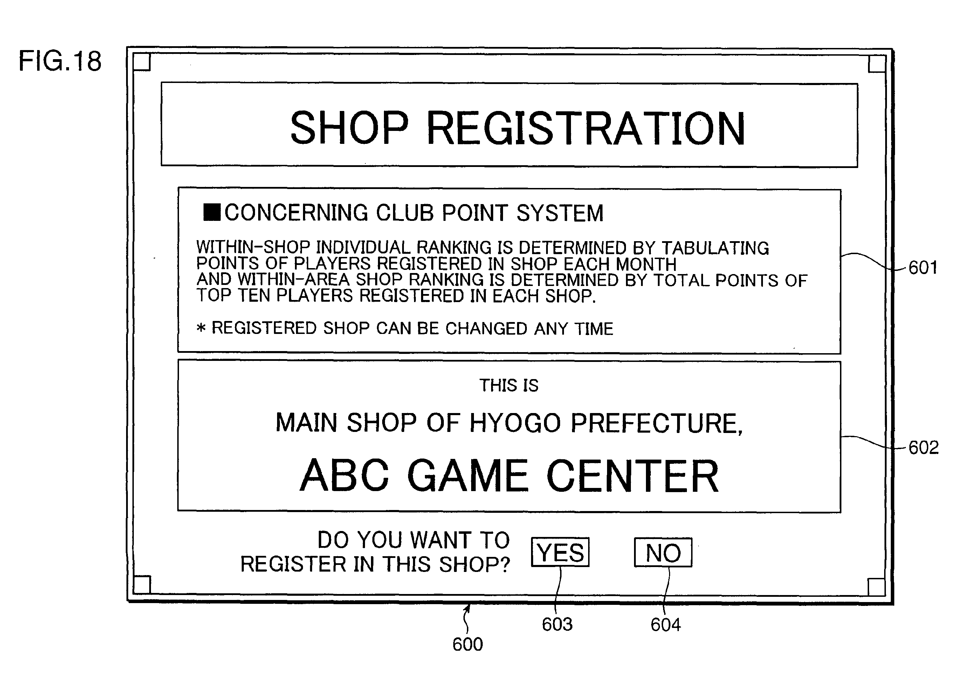

FIGS. 18 to 25 are examples of diagrams showing various screens displayed on the monitors 11 of the client terminal units 1. FIG. 18 is one example of the diagram showing a belonging-shop setting screen displayed in Steps S611 and S615 of the flow chart shown in FIG. 15. On a belonging-shop setting screen 600 are displayed a point describing portion 601 arranged substantially in the center and adapted to display a descriptive text concerning points, a shop displaying portion 602 arranged below the point describing portion 601 and adapted to display the area ID and the shop ID, a YES button 603 to be pressed down in the case of setting the shop displayed in the shop displaying portion 602 to the belonging shop, and a NO button 604 to be pressed down in the case of not setting the shop displayed in the shop displaying portion 602 to the belonging shop.

Since "Hyogo Main Office, ABC Game Center" is displayed in the shop displaying portion 602, the area ID of this shop is "Hyogo Prefecture", the shop ID is "ABC Game Center" and "Main Office" is displayed, it can be known that this shop is in the first place among those within the area. The player can set this shop to the belonging shop by confirming the area ID and the shop ID of the shop where the client terminal unit 1 he is presently playing is installed and pressing the YES button 603 down in the case of wishing to set this shop to the belonging shop.

FIG. 19 is a diagram showing a belonging-shop result display screen displayed in Step S623 of the flow chart shown in FIG. 16. On a belonging-shop result display screen 610 are displayed a title displaying portion 614 arranged at an upper part and adapted to show the display of the shop result of the previous month, a main-shop displaying portion 611 arranged substantially in the center of the screen and adapted to show that the within-area shop rank order was the first place, a shop result describing portion 612 arranged below the main-shop displaying portion 611 and adapted to display the detailed information of the shop result of the previous month, and a shop rank-order displaying portion 613 arranged below the shop result describing portion 612 and adapted to display the shop rank order and the within-area rank order of the previous month.

In the main-shop displaying portion 611 are displayed "ABC Game Center became 'Hyogo Main Office'", from which it can be known that the previous month's within-area rank order of the "ABC Game Center", which is the belonging shop of the player, was the first place. In the shop rank-order displaying portion 613 is displayed, "1^{st} Place/123 shops" is displayed in the row of "Within Prefecture", from which it can be known that the previous month's within-area shop rank order of this shop (ABC Game Center) was the first place. Further, "2^{nd} Place/1234 shops" is displayed in the row of "Nationwide", from which it can be known that the previous month's shop rank order of this shop was the second place among 1234 shops nationwide. It should be noted that information such as the previous month's shop accumulated points is displayed in the shop result describing portion 612.

FIG. 20 is a diagram showing a within-shop result display screen displayed in Step S623 of the flow chart shown in FIG. 16. On a within-shop result display screen 620 are displayed a title displaying portion 621 arranged at an upper part and adapted to show the display of the within-shop result of the previous month, a within-shop result displaying portion 622 arranged substantially in the center of the screen and adapted to show that the within-shop rank order was the first place, and a description displaying portion 623 arranged below the within-shop displaying portion 622 and adapted to display description concerning the within-shop result. In the within-shop result displaying portion 622 is displayed "You Became First Place in ABC Game Center", from which it can be known that the previous month's within-shop rank order of the player is the first place.

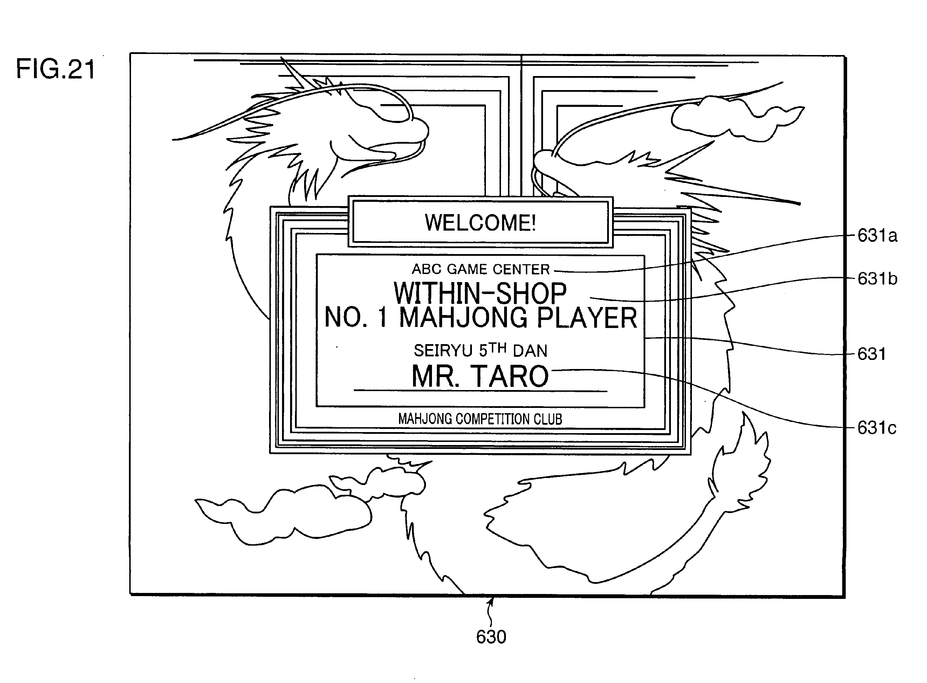

FIG. 21 is a diagram showing a VIP display screen displayed in Step S629 of the flow chart shown in FIG. 16. A player information displaying portion 631 for displaying the player information is displayed substantially in the center of a VIP display screen 630. In the player information displaying portion 631 are displayed a shop ID displaying part 631a for displaying the shop ID of the belonging shop of the player, a within-shop rank order displaying part 631b for displaying the within-shop rank order of the player, and a player ID displaying part 631c for displaying the player ID of the player.

In the shop ID displaying part 631a is displayed "ABC Game Center", from which it can be known that the shop ID of the belonging shop of the player is "ABC Game Center". In the within-shop rank order displaying part 631b is displayed "Within-Shop No. 1 Mahjong Player", from which it can be known that the previous month's within-shop rank order of the player was the first place. Further, "Mr. Taro" is displayed in the player ID displaying part 631c, from which it can be known that the player ID of this player is "Taro". Since this screen is displayed only to the players whose within-shop rank orders are within the tenth place, the players' interest in the within-shop ranking is increased and the gambling spirit of the players within the tenth place in the within-shop ranking is urged by displaying this screen.

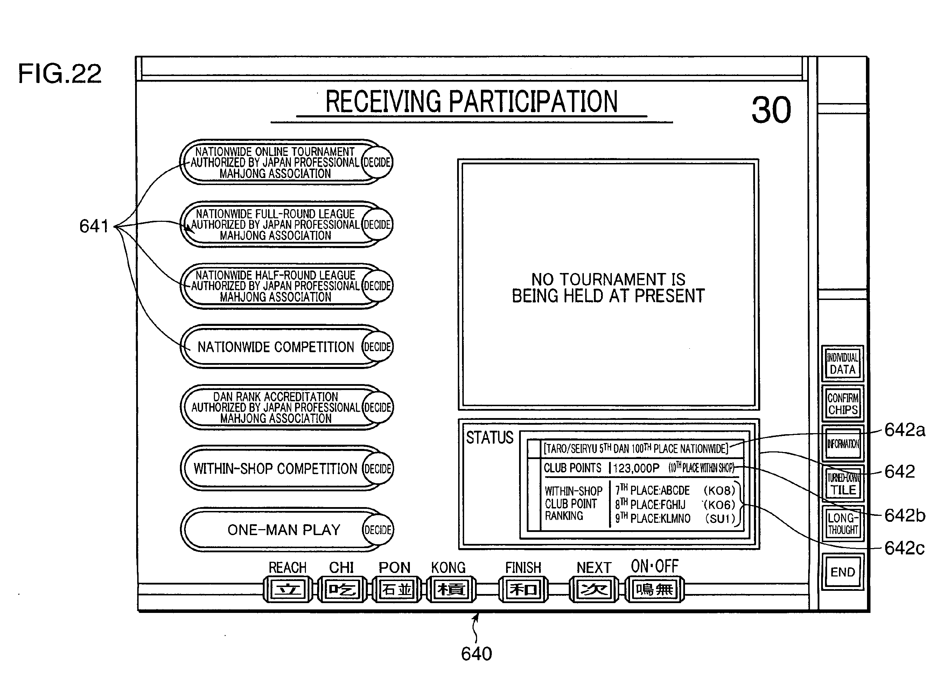

FIG. 22 is a diagram showing a participation receiving screen displayed in Step S631 of the flow chart shown in FIG. 16. On a participation receiving screen 640 are displayed game selection buttons 641 arranged at the left side to be operated to select a game, and a result displaying portion 642 arranged at a lower right part and adapted to display the present month's result of the player up to the present. In the result displaying portion 642 are displayed a rank-order displaying part 642a for displaying the rank order (nationwide rank order) of the player, a within-shop rank-order displaying part 642b for displaying the present month's within-shop rank order of the player, and a better player displaying part 642c for displaying the player IDs of three players above the player in the within-shop ranking.

The player can select a desired game by pressing down any one of the game selection buttons 641. In the rank order displaying part 642a is displayed "100^{th} Place Nationwide", from which it can be known that the present month's nationwide rank order of the player is the 100^{th} place. Further, "10^{th} Place within Shop" is displayed in the within-shop rank-order displaying part 642b, from which it can be known that the present month's within-shop rank order of the player is the 10^{th} place. In addition, the player IDs of three players having rank orders (7^{th} to 9^{th} places) above the present month's rank order (10^{th} place) of the player are displayed in the better player displaying part 642c, whereby the player can confirm the player IDs of the competitors within the shop.

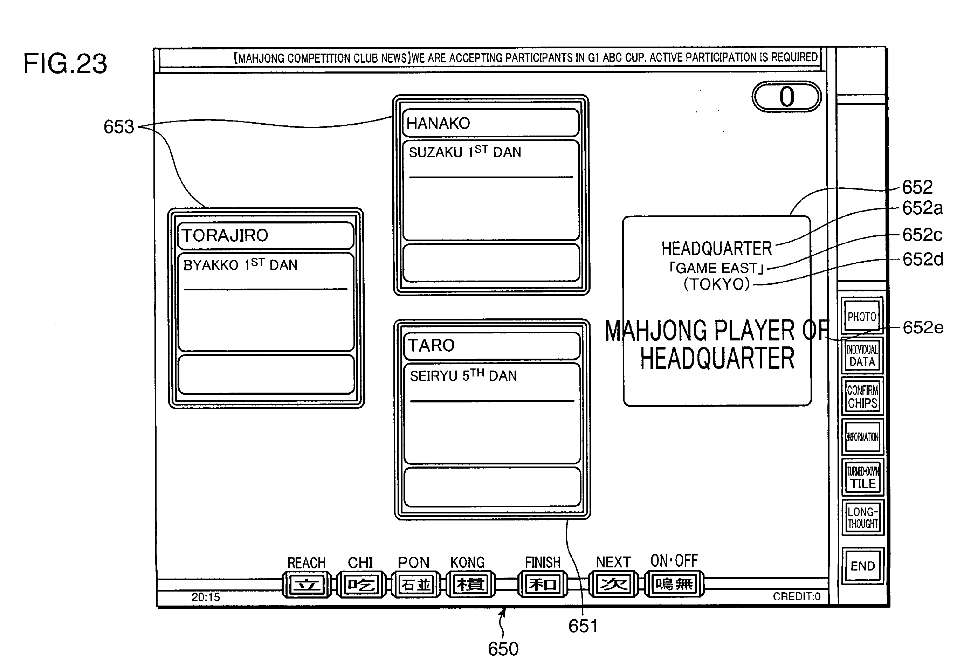

FIG. 23 is a diagram showing a competitor display screen displayed in Step S637 of the flow chart shown in FIG. 16. On a competitor display screen 650 are displayed a player information displaying portion 651 arranged at a lower part and adapted to display the player information such as the player ID of the player, a guidance displaying portion 652 arranged at the right side and adapted to display the guidance information of the player at the right side (shimocha) of the player, and competitor displaying portions 653 arranged at the upper and left sides and adapted to display the player IDs and the like player information of the players at the opposite side (toimen) and at the left side (kamicha).

In the player information displaying portion 651 is displayed "Taro", from which it can be known that the player ID is "Taro". In the guidance displaying portion 652 is displayed "Headquarter No. 1 Mahjong Player", from which it can be known that a player who belongs to the shop being the first place in the shop ranking and is the first place in the within-shop ranking was determined as a competitor. Further, the competitors other than the one displayed in the guidance displaying portion 652 can be confirmed by the information displaying portion 653.

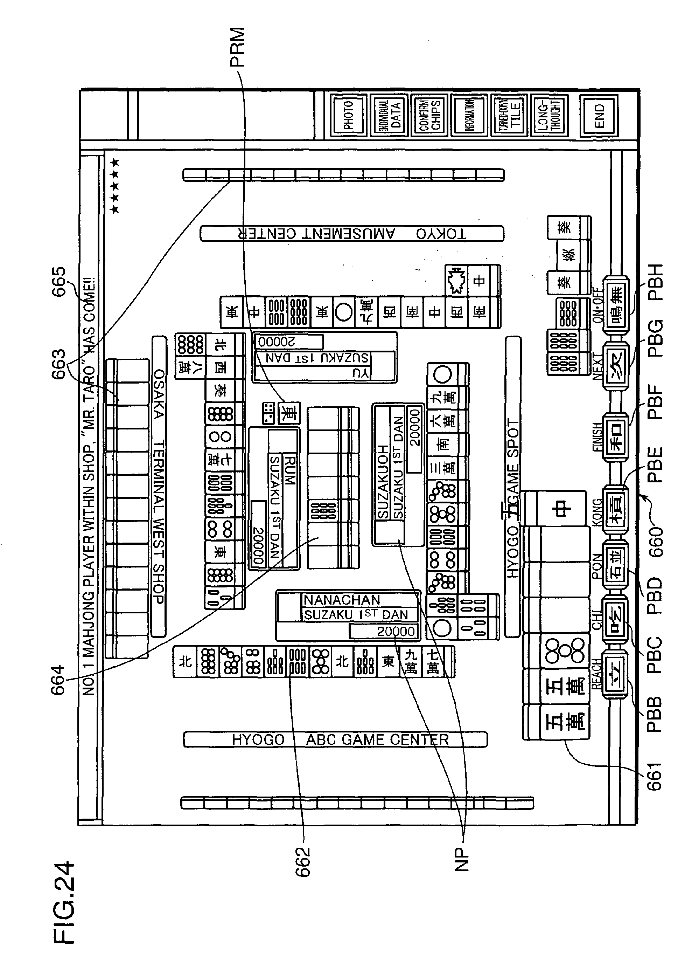

FIG. 24 is a diagram showing a competition screen displayed in Step S639 of the flow chart shown in FIG. 16. At the bottom of a competition screen 660 are displayed a Reach button PBB to be pressed in the case of calling "Reach", a Chi button PBC to be pressed down in the case of calling "Chi", a Pon button PBD to be pressed in the case of calling "Pon", a Kong button PBE to be pressed in the case of calling "Kong", a completion button PBF to be pressed in the case of declaring the completion of a wining hand, an advance button PBG to be pressed in the case of advancing to the next wind, and a call changing button PBH to be pressed in the case of changing the selection as to whether any call is to be made to the discarded tiles of the other players.

Further, hand objects 661 representing the hand of the player are displayed in a standing manner at the bottom side of the competition screen 660, and competitor's hand objects 663 representing the hands of the competitors are displayed in a standing manner at the upper, left and right sides of the competition screen 660. Further, a wall object 664 representing a wall including a "Dora" tile is displayed substantially in the center of the competition screen 660, and discarded-tile objects 662 representing the discarded tiles are displayed around the wall object 664. Since kind displaying surfaces representing the kinds of the hand objects 661 are faced toward a camera viewpoint, the player can confirm the kinds of the hand object 661 upon seeing the competition screen 660. For example, the kind of the second hand object from the left is "Character tile 5".

Further, player ID displaying portions NP for displaying the player IDs of the respective players are displayed between the wall object 664 and the discarded-tile objects 662 on the competition 660, and a wind mark PRM showing the prevailing wind is displayed below the player ID displaying portion NP of the competitor at the right side (shimocha). It can be, for example, known from the player ID displaying portions NP that the player ID of the player is "Suzakuoh" and that of the competitor at the left side of the player is "Nanachan". It can be also known that the prevailing wind is east upon seeing a character "East" written in the wind mark PRM.

In addition, a guidance displaying portion 665 for displaying the guidance information is displayed at the top part of the competition screen 660. In the guidance displaying portion 665 is displayed "Mr. Taro, Within-Shop No. 1 Player, Has Come", from which it can be known that the player who belongs to this shop and is the first place in the within-shop ranking (player whose player ID is "Taro") started playing by means of another client terminal unit 1 of the shop where the client terminal unit 1 the player (player whose player ID is "Suzakuoh") is currently playing is installed.

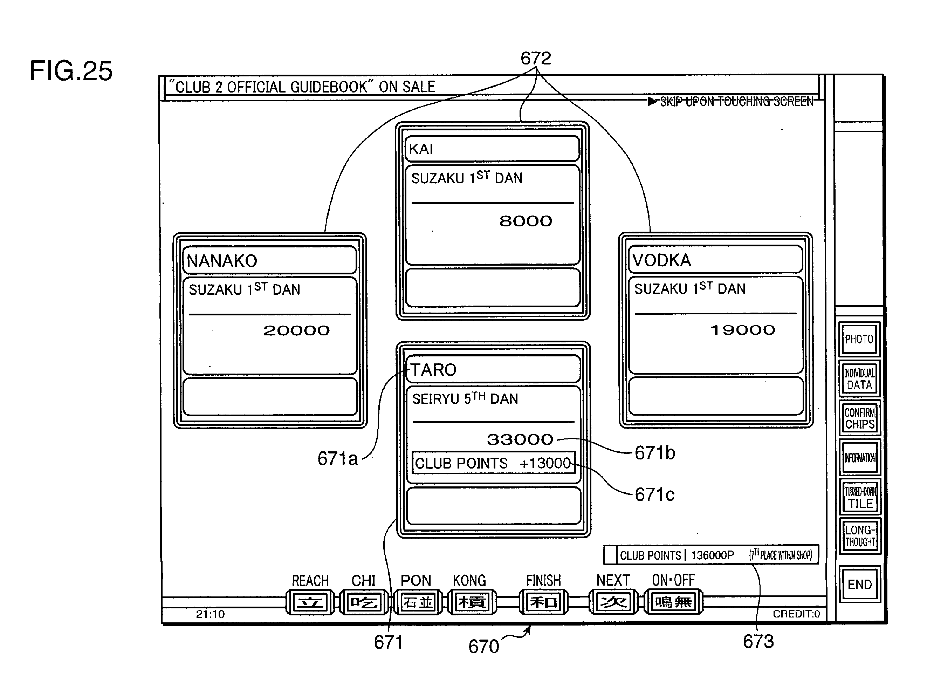

FIG. 25 is a diagram showing a competition result display screen displayed in Step S647 of the flow chart shown in FIG. 16. On a competition result display screen 670 are displayed a player information displaying portion 671 arranged at the bottom side and adapted to display the player ID, the scope of chips, and the like of the player, competitor displaying portions 672 arranged at the right, upper and left sides and adapted to display the player IDs and the scope of chips of the players at the right side (shimocha), at the upper side (toimen), and the left side (kamicha), and an accumulated-point displaying portion 673 arranged at the bottom side and adapted to display accumulated points reflecting the competition result of the player.

Further, a player ID displaying part 671a for displaying the player ID of the player, a score displaying part 671b for displaying the score of chips as a result of the competition, and a point displaying part 671c for displaying points obtained from the score of chips are displayed in the player information displaying portion 671. "33000" is displayed in the score displaying part 671b, from which it can be known that the score of chips as a result of the competition is 33000 points. Further, "+13000" is displayed in the point displaying part 671c, from which it can be known that the points obtained as a result of the competition were +13000 (= 33000-20000). Furthermore, "136000 P (7^{th} place within the shop)" is displayed in the accumulated point displaying portion 673, from which it can be known that the accumulated points of the player became 136000 P and the within-shop rank order of the player became the 7^{th} place.

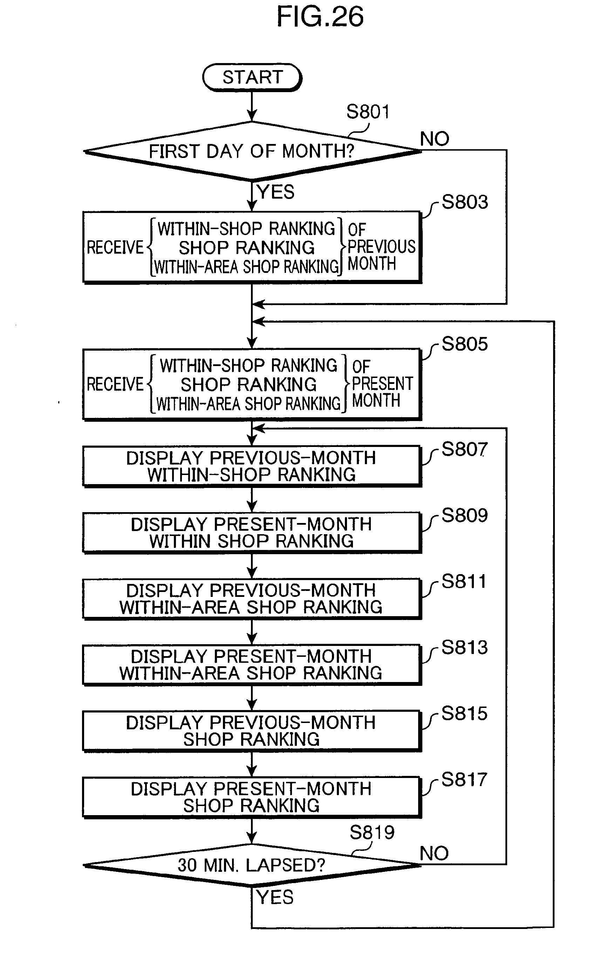

FIG. 26 is a flow chart showing the operation of the shop server 2. First, the guidance receiving section 261a reads the current date information from a clock (not shown in FIG. 6) built in the control unit 26 and judges whether or not today is the first day of the month (Step S801). If today is judged not to be the first day of the month (NO in Step S801), this routine proceeds to Step S805. If today is judged to be the first day of the month (YES in Step S801), the guidance receiving section 261a obtains the within-shop ranking information, the shop ranking information and the within-area shop ranking information of the previous month (i.e. previous-month ranking information) from the center server 3 (Step S803).

If the judgment result in Step S801 is negative or if the operation in Step S803 is completed, the guidance receiving section 261a obtains the within-shop ranking information, the shop ranking information and the within-area shop ranking information of the present month (i.e. present-month ranking information) from the center server 3 (Step S805). Then, the guidance displaying section 261b causes the within-shop ranking information of the present month (i.e. present-month within-shop ranking information) to be displayed (Step S809) after a predetermined time (e.g. three minutes) after causing the within-shop ranking information of the previous month (i.e. previous-month within-shop ranking information) to be displayed (Step S807).

Subsequently, the guidance displaying section 261b causes the within-area shop ranking information of the present month (i.e. present-month within-area shop ranking information) to be displayed (Step S813) after a predetermined time (e.g. three minutes) after causing the within-area shop ranking information of the previous month (i.e. previous-month within-area shop ranking information) to be displayed (Step S811). Then, the guidance displaying section 261b causes the shop ranking information of the present month (i.e. present-month shop ranking information) to be displayed (Step S817) after a predetermined time (e.g. three minutes) after causing the shop ranking information of the previous month (i.e. previous-month shop ranking information) to be displayed (Step S815).

Subsequently, the guidance receiving section 261a judges whether or not a period of thirty minutes or longer has lapsed after the operation in Step S805 was carried out (Step S809). If the period of thirty minutes or longer is judged not to have lapsed (NO in Step S809), this routine returns to Step S807 and the operations in Step S807 to S817 are repeated. If the period of thirty minutes or longer is judged to have lapsed (YES in Step S809), this routine returns to Step S805 and the operations in Step S805 to S817 are repeated.

FIGS. 27 to 31 are examples of diagrams showing various screens displayed on the monitor 21 of the shop server 2. FIG. 27 is a diagram showing a present-month within-shop ranking screen displayed in Step S807 of the flow chart shown in FIG. 26. On a present-month within-shop ranking screen 700 are displayed a ranking displaying portion 701 arranged substantially in the center and adapted to display the present-month within-shop ranking and terminal information displaying portions 702 arranged at the upper and bottom sides and adapted to display the information of the client terminal units 1 (here, eight) in the shop where the shop server 2 is installed.

A ranking displaying part 701a for displaying the within-shop ranking in the descending order toward the bottom, an ID displaying part 701b for displaying the player IDs, and a point displaying part 701c for displaying accumulated points are displayed in the ranking displaying portion 701 in this order from the left side of the screen. For example, it can be known that the player ID of the player who is the first place in the within-shop ranking is "Taro" and his accumulated points are "123000 P". In other words, the player IDs, the accumulated points and the like can be confirmed for each within-shop rank order by seeing the information displayed in the ranking displaying portion 701.

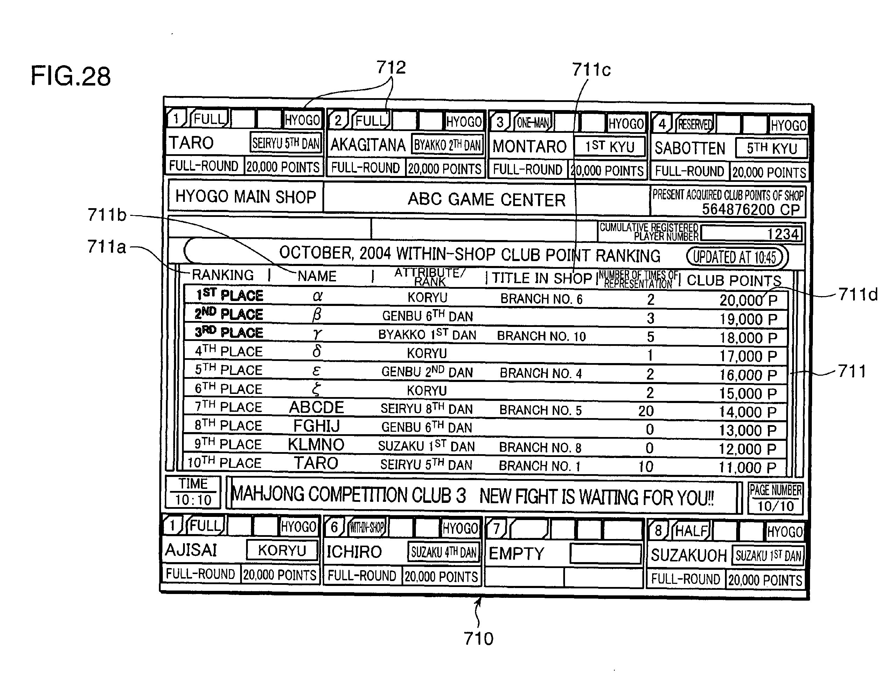

FIG. 28 is a diagram showing a present-month within-shop ranking screen displayed in Step S809 of the flow chart shown in FIG. 26. On a present-month within-shop ranking screen 710 are displayed a ranking displaying portion 711 arranged substantially in the center and adapted to display the present-month within-shop ranking, and terminal information displaying portions 712 arranged at the upper and bottom sides and adapted to display the information of the client terminal units 1 (here, eight) in the shop where the shop server 2 is installed.

A ranking displaying part 711a for displaying the within-shop ranking in the descending order toward the bottom, an ID displaying part 711b for displaying the player IDs, a previous-month ranking displaying part 711c for displaying the within-shop rank order of the previous month if the previous-month within-shop rank order of the player was within the tenth place, and a point displaying part 711d for displaying the accumulated points up the present time are displayed in the ranking displaying portion 711 in this order from the left side of the screen. For example, it can be known that the player ID of the player who is the tenth place in the within-shop ranking is "Taro", his accumulated points are "11000 P" and he was the first place in the within-shop ranking last month. In other words, the player ID, the accumulated points, the previous-month within-shop rank order and the like can be confirmed for each within-shop rank order by seeing the information displayed in the ranking displaying portion 711.

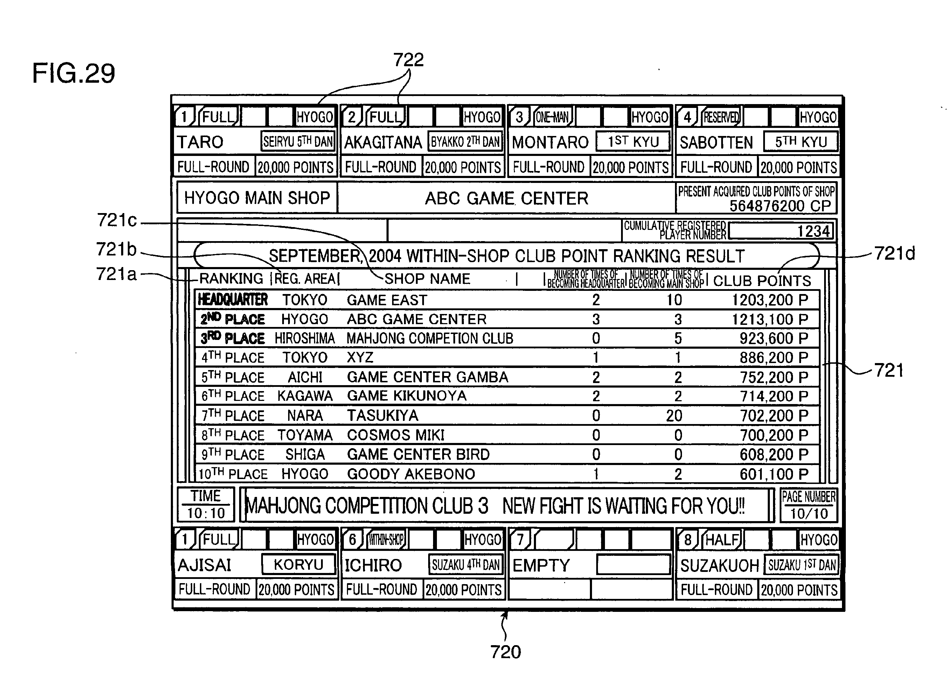

FIG. 29 is a diagram showing a previous-month shop ranking screen displayed in Step S815 of the flow chart shown in FIG. 26. On a previous-month shop ranking screen 720 are displayed a ranking displaying portion 721 arranged substantially in the center and adapted to display the previous-month shop ranking, and terminal information displaying portions 722 arranged at the upper and bottom sides and adapted to display the information of the client terminal units 1 (here, eight) in the shop where the shop server 2 is installed.

A ranking displaying part 721a for displaying the shop ranking in the descending order toward the bottom, an area displaying part 721b for displaying the area IDs (names of prefectures) of the locations of the shops, an ID displaying part 721c for displaying the shop IDs, and a point displaying part 721d for displaying the accumulated points of the shops are displayed in the ranking displaying portion 721 in this order from the left side of the screen. For example, it can be known that the shop ID of the shop that is the second place in the shop ranking is "ABC Game Center", the area ID thereof is Hyogo (Prefecture), and the accumulated points thereof are "1213100 P". In other words, the shop ID, the area ID, the accumulated points and the like can be confirmed for each shop rank order by seeing the information displayed in the ranking displaying portion 701.

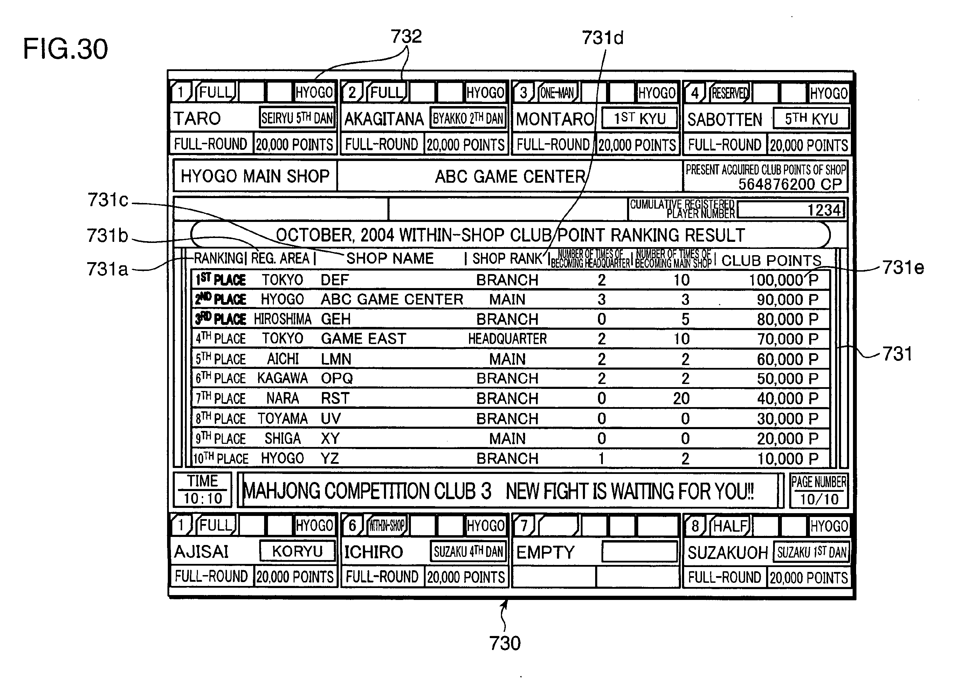

FIG. 30 is a diagram showing a present-month shop ranking screen displayed in Step S817 of the flow chart shown in FIG. 26. On a present-month shop ranking screen 730 are displayed a ranking displaying portion 731 arranged substantially in the center and adapted to display the present-month shop ranking, and terminal information displaying portions 732 arranged at the upper and bottom sides and adapted to display the information of the client terminal units 1 (here, eight) in the shop where the shop server 2 is installed.

A ranking displaying part 731a for displaying the shop ranking in the descending order toward the bottom, an area displaying part 731b for displaying the area IDs (names of prefectures) of the locations of the shops, an ID displaying part 731c for displaying the shop IDs, a shop name appellation displaying portion 731d for displaying the shop appellations (headquarter, main shops, branches) of the previous month, and a point displaying part 731e for displaying the accumulated points of the shops up to the present time are displayed in the ranking displaying portion 731 in this order from the left side of the screen. For example, it can be known that the shop ID of the shop that is the second place in the shop ranking is "ABC Game Center", the area ID thereof is Hyogo (Prefecture), the name appellation of the previous month is "Main Office", and the accumulated pints of the shop up to the present time are "90000 P". In other words, the shop ID, the area ID, the shop appellation of the previous month, the accumulated points and the like can be confirmed for each shop rank order by seeing the information displayed in the ranking displaying portion 731.

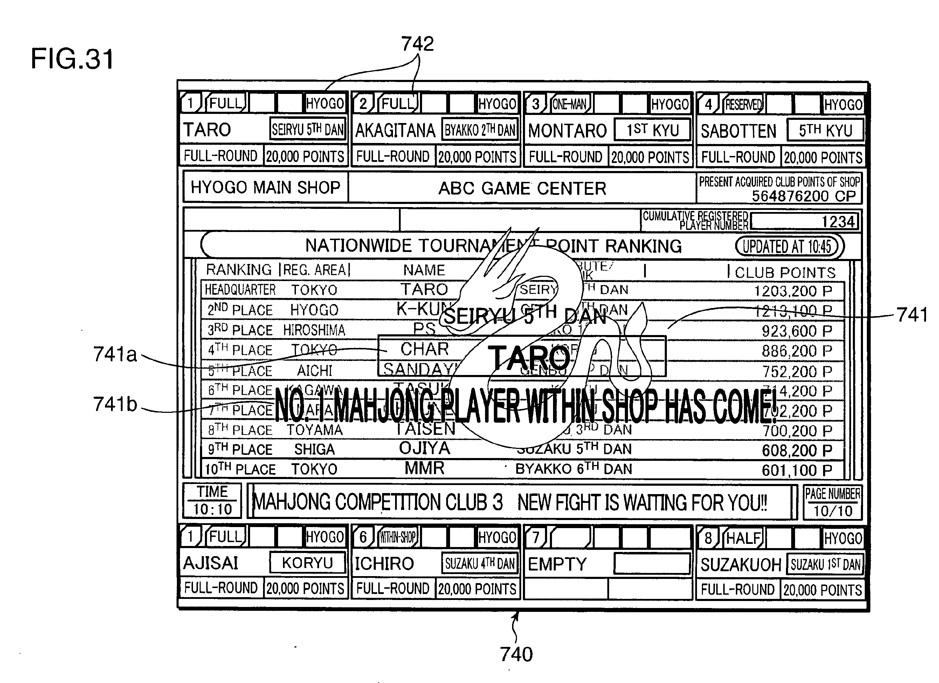

FIG. 31 is a diagram showing a guidance display screen displayed in response to an interrupt signal. On a guidance display screen 740 are displayed a guidance displaying portion 741 arranged substantially in the center and adapted to display the guidance information transmitted from the central server 3 while having an interrupt signal added thereto, and terminal information displaying portions 742 arranged at the upper and bottom sides and adapted to display the information of the client terminal units 1 (here, eight) in the shop where the shop server 2 is installed.

In the guidance displaying portion 741 are displayed a player ID displaying part 741a for displaying the player ID and a ranking displaying part 741b for displaying the within-shop rank order of the player and the like. Since "Taro" is displayed in the player ID displaying part 741a and "Within-Shop No. 1 Player Has Come" is displayed in the ranking displaying part 741b, it can be known that the player belonging to the shop where the shop server 2 displaying the guidance display screen 740 is installed, being the first place in the within-shop ranking and having the player ID of "Taro" started playing in this shop.

As described above, in the case where the player within a first specified rank order (here, tenth place) in the within-shop ranking will start a game by means of the client terminal unit 1A in the shop to which the player virtually belongs, guidance to the effect that the player within the first specified rank order in the within-shop ranking is displayed to the other client terminal units 1A' in this shop as in the guidance displaying portion 665 of the competition screen 660 shown in FIG. 24. Thus, the players playing the game by means of the client terminal units 1A' can confirm that the player virtually belonging to this shop and being within the first specified rank order in the within-shop ranking will start the game in this shop.

Accordingly, the players playing the game by means of the client terminal units 1A' in the shop where the client terminal unit 1A is installed can specifically know the player virtually belonging to this shop and being within the first specified rank order in the within-shop ranking. Therefore, an interest in the within-shop ranking is increased and willingness to compete is urged, thereby effectively making the game more interesting.

Since the player within the first specified rank order in the within-shop ranking can make such an appeal to the players playing by means of the other client terminal units 1A' in this shop that his within-shop rank order is within the first specified rank order upon starting the game in the shop to which he virtually belongs, an interest in the within-shop ranking is increased and gambling spirit is urged, thereby effectively making the game more interesting. Further, since the VIP display screen 630 shown in FIG. 21 is displayed when the player within the first specified rank order in the within-shop ranking starts the game in the shop to which he virtually belongs, an interest in the within-shop ranking is increased and gambling spirit is urged, thereby effectively making the game more interesting.

Further, in the case where the player within the first specified rank order in the within-shop ranking starts the competition game by means of the client terminal unit 1A, guidance to the effect that the player within the first specified rank order in the within-shop ranking was determined as a competitor is displayed as in the guidance displaying portion 652 of the competitor display screen 650 shown in FIG. 23 when the client terminal units 1B are determined to become competitors. Thus, the players playing by means of the client terminal units 1B can confirm that the player within the first specified rank order in the within-shop ranking is a competitor.

Accordingly, the players playing by means of the client terminal units 1B can know that they will compete with the player within the first specified rank order (here, within the tenth place) in the within-shop ranking, thereby increasing an interest in the within-shop ranking and effectively making the competition game more interesting.

Further, since the player within the first specified rank order in the within-shop ranking can make such an appeal to the players playing by means of the client terminal units 1B and becoming competitors upon starting the game that his within-shop rank order is within the first specified rank order, an interest in the within-shop ranking is increased and gambling spirit is urged, thereby effectively making the competition game more interesting.

Particularly, in the case where another client terminal unit 1A' installed in the same shop as the client terminal unit 1A operated by the player within the first specified rank order in the within-shop ranking was determined as the client terminal unit 1B to become a competitor, the player playing by means of the client terminal unit 1B to become the competitor (here, client terminal unit 1A') can specifically know the player within the first specified rank order (e.g. within the tenth place) in the within-shop ranking in the shop where the client terminal unit 1A' he is currently playing is installed. Therefore, an interest in the within-shop ranking is increased and willingness to compete is urged, thereby more effectively making the game more interesting.

In addition, in the case where the player within the first specified rank order (here, within the tenth place) in the within-shop ranking starts the game by means of the client terminal unit 1A in the shop to which he virtually belongs, guidance to the effect that the player within the first specified rank order in the within-shop ranking will start the game is displayed to the shop server 2 in the shop as in the guidance displaying portion 741 of the guidance display screen 740 shown in FIG. 31. Thus, the players and spectators present in this shop can confirm that the player virtually belonging to this shop and being within the first specified rank order in the within-shop ranking will start the game in this shop.

Accordingly, the players and spectators in the shop where the client terminal unit 1A is installed can specifically know that the player virtually belonging to this shop and being within the first specified rank order in the within-shop ranking will start the game in this shop. Therefore, an interest in the within-shop ranking is increased and willingness to compete is urged, thereby effectively making the game more interesting.

Since the player within the first specified rank order in the within-shop ranking can make such an appeal to the players and the spectators in this shop that his within-shop rank order is within the first specified rank order upon starting the game in the shop to which he virtually belongs, an interest in the within-shop ranking is increased and gambling spirit is urged, thereby effectively making the game more interesting.

Further, in the case where the player virtually belonging to the shop within a second specified rank order (here, first place) in the within-area shop ranking and being within the first specified rank order (here, within the tenth place) in the within-shop ranking starts the game by means of the client terminal unit 1A in the shop having the same area identification information as the shop to which he virtually belongs (located in the same area), guidance to the effect that the player virtually belonging to the shop within the second specified rank order in the within-area shop ranking and being within the first specified rank order in the within-shop ranking is displayed to the other client terminal units 1A' in this shop as in the guidance displaying portion 665 of the competition screen 660 shown in FIG. 24. Thus, the players playing by means of the client terminal units 1A' can confirm that the player virtually belonging to the shop within the second specified rank order in the within-area shop ranking and being within the first specified rank order in the within-shop ranking will start the game.

Accordingly, the players playing the game by means of the other client terminal units 1A' in the shop where the client terminal unit 1A is installed can specifically know the player virtually belonging to the shop having the same area identification information as this shop (located in the same area) and within the second specified rank order (e.g. first place) in the within-area shop ranking, and being within the first specified rank order (e.g. within the tenth place) in the within-shop ranking. Therefore, an interest in the within-area shop ranking and the within-shop ranking is increased and willingness to compete is urged, thereby effectively making the game more interesting.

Since the player belonging to the shop within the second specified rank order in the within-area shop ranking and being within the first specified rank order in the within-shop ranking can make such an appeal to the players playing by means of the client terminal units 1A' in this shop that the within-area shop rank order of the shop to which he virtually belongs is within the second specified rank order and his within-shop rank order is within the first specified rank order upon starting the game in the shop having the same area identification information as the shop to which he virtually belongs (located in the same area). Therefore, an interest in the within-area shop ranking and the within-shop ranking is increased and gambling spirit is urged, thereby effectively making the game more interesting.

In addition, in the case where the player virtually belonging to the shop within the second specified rank order in the within-area shop ranking and being within the first specified rank order in the within-shop ranking starts the game by means of the client terminal unit 1A, guidance to the effect that the player virtually belonging to the shop within the second specified rank order in the within-area shop ranking and being within the first specified rank order in the within-shop ranking was determined as a competitor is displayed to the client terminal units 1B as in the guidance displaying portion 652 of the competitor display screen 650 shown in FIG. 23 when the client terminal units 1B are determined to become competitors. Thus, the players playing the game by means of the client terminal units 1B can confirm that the player virtually belonging to the shop within the second specified rank order in the within-area shop ranking and being within the first specified rank order in the within-shop ranking is a competitor.

Accordingly, the players playing by means of the client terminal units 1B and becoming competitors can know that they will compete with the player virtually belonging to the shop within the second specified rank order (here, first place) in the within-area shop ranking (i.e. main shop) and being within the first specified rank order (here, within the tenth place) in the within-shop ranking. Therefore, an interest in the within-area shop ranking and the within-shop ranking is increased, thereby effectively making the competition game more interesting.

The player virtually belonging to the shop within the second specified rank order in the within-area shop ranking and being within the first specified rank order in the within-shop ranking can make such an appeal to the players playing by means of the client terminal units 1B and becoming competitors that the within-area shop rank order of the shop to which he virtually belongs is within the second specified rank order and his within-shop rank order is within the first specified rand order upon starting the game. Therefore, an interest in the within-area shop ranking and the within-shop ranking is increased and gambling spirit is urged, thereby effectively making the competition game more interesting.

Particularly, in the case where another client terminal unit 1A' installed in the same shop as the client terminal unit 1A operated by player virtually belonging to the shop within the second specified rank order in the within-area shop ranking and being within the first specified rank order in the within-shop ranking is determined as the client terminal unit 1B to become a competitor, the player playing by means of the client terminal unit 1B (here, client terminal unit 1A') and becoming a competitor can specifically know the player belonging to the shop having the same area identification information as the shop where the client terminal unit 1A' he is currently playing is installed (located in the same area) and within the second specified rank order in the within-area shop ranking, and being within the first specified rank order (e.g. within the tenth place) in the within-shop ranking. Therefore, an interest in the within-area shop ranking and the within-shop ranking is further increased and willingness to compete is urged, thereby more effectively making the game more interesting.

Further, in the case where the player virtually belonging to the shop within the second specified rank order in the within-area shop ranking and being within the first specified rank order in the within-shop ranking starts the game by means of the client terminal unit 1A in a shop having the same area identification information (located in the same area) as the shop to which the player virtually belongs, guidance to the effect that the player virtually belonging to the shop within the second specified rank order in the within-area shop ranking and being within the first specified rank order in the within-shop ranking will start the game is displayed to the shop server 2 in this shop as in the guidance displaying portion 741 of the guidance display screen 740 shown in FIG. 31. Thus, players and spectators present in this shop can confirm that the player virtually belonging to the shop within the second specified rank order in the within-area shop ranking and being within the first specified rank order in the within-shop ranking will start the game in this shop.

Accordingly, the players and the spectators present in the shop where the client terminal unit 1A is installed can specifically know the player virtually belonging to the shop having the same identification information (located in the same area) as this shop and within the second specified rank order (herein, first place) in the within-area shop ranking and being within the first specified rank order (here, within the tenth place) in the within-shop ranking. Therefore, an interest in the within-area shop ranking and the within-shop ranking is increased and willingness to compete is urged, thereby effectively making the competition game more interesting.

Further, the player virtually belonging to the shop within the second specified rank order in the within-area shop ranking and being within the first specified rank order in the within-shop ranking can make such an appeal to the players and the spectators present in this shop that the within-area rank order of the shop to which he virtually belongs is within the second specified rank order and his within-shop rank order is within the first specified rank order upon starting the game in the shop having the same identification information (located in the same area) as the shop to which he virtually belongs. Therefore, an interest in the within-area shop ranking and the within-shop ranking is increased and gambling spirit is urged, thereby effectively making the competition game more interesting.

In addition, in the case where the player virtually belonging to the shop within a third specified rank order (here, first place) in the shop ranking (i.e. headquarter) and being within the first specified rank order in the within-shop ranking starts the game by means of the client terminal unit 1A, guidance to the effect that the player virtually belonging to the shop within the third specified rank order in the shop ranking and being within the first specified rank order in the within-shop ranking will start the game is displayed on the other client terminal units 1A' in this shop as in the guidance displaying portion 665 of the competition screen 660 shown in FIG. 24. Thus, the players playing the game by means of the other client terminal units can confirm that the player virtually belonging to the shop within the third specified rank order in the shop ranking and being within the first specified rank order in the within-shop ranking will start the game.

Accordingly, the players playing by means of the other client terminal units 1A' in the shop where the client terminal unit 1A is installed can specifically know the player virtually belonging to the shop within the third specified rank order (here, first place) in the shop ranking (i.e. headquarter) and being within the first specified rank order (here, within the tenth place) in the within-shop ranking. Therefore, an interest in the shop ranking and the within-shop ranking is increased and willingness to compete is urged, thereby effectively making the competition game more interesting.

Further, the player virtually belonging to the shop within the third specified rank order in the shop ranking and being within the first specified rank order in the within-shop ranking can make such an appeal to the players playing by means of the game terminal units in an arbitrary shop that the shop to which he virtually belongs is within the third specified rank order in the shop ranking and his within-shop rank order is within the first specified rank order upon starting the game in this shop. Therefore, an interest in the shop ranking and the within-shop ranking is increased and gambling spirit is urged, thereby effectively making the competition game more interesting.

Further, in the case where the player virtually belonging to the shop within the third specified rank order in the shop ranking and being within the first specified rank order in the within-shop ranking starts the competition game by means of the client terminal unit 1A, guidance to the effect that the player virtually belonging to the shop within the third specified rank order in the shop ranking and being within the first specified rank order in the within-shop ranking was determined as a competitor is displayed on the client terminal units 1B as in the guidance displaying portion 652 of the competitor display screen 650 shown in FIG. 23 when the client terminal units 1B to become competitors are determined. Thus, the players playing the game by means of the client terminal units 1B can confirm that the player virtually belonging to the shop within the third specified rank order in the shop ranking and being within the first specified rank order in the within-shop ranking is a competitor.

Accordingly, the players playing by means of the client terminal units 1B and becoming competitors can specifically know that they will compete with the player virtually belonging to the shop within the third specified rank order (here, first place) in the shop ranking (i.e. headquarter) and being within the first specified rank order (here, within the tenth place) in the within-shop ranking. Therefore, an interest in the shop ranking and the within-shop ranking is increased, thereby effectively making the competition game more interesting.

Further, the player virtually belonging to the shop within the third specified rank order in the shop ranking and being within the first specified rank order in the within-shop ranking can make such an appeal to the players playing by means of the game terminal units as competitors that the shop to which he virtually belongs is within the third specified rank order in the shop ranking and his within-shop rank order is within the first specified rank order upon starting the game. Therefore, an interest in the shop ranking and the within-shop ranking is increased and gambling spirit is urged, thereby effectively making the competition game more interesting.

Particularly, in the case where another client terminal unit 1A' installed in the same shop as the client terminal unit 1A operated by the player virtually belonging to the shop within the third specified rank order and being within the first specified rank order in the within-shop ranking is determined as the client terminal unit 1B to become a competitor, the player playing by means of the client terminal unit 1B (here, client terminal unit 1A') and becoming a competitor can specifically know the player virtually belonging to the shop within the third specified rank order in the shop ranking and being within the first specified rank order in the within-shop ranking. Therefore, an interest in the shop ranking and the within-shop ranking is increased and willingness to compete is urged, thereby more effectively making the game more interesting.

In addition, in the case where the player virtually belonging to the shop within the third specified rank order in the shop ranking (i.e. headquarter) and being within the first specified rank order in the within-shop ranking starts the game by means of the client terminal unit 1A, guidance to the effect that the player virtually belonging to the shop within the third specified rank order in the shop ranking and being within the first specified rank order in the within-shop ranking will start the game is displayed on the shop server 2 in this shop as in the guidance displaying portion 741 of the guidance display screen 740 shown in FIG. 31. Thus, players and spectators present in this shop can confirm that the player virtually belonging to the shop within the third specified rank order in the shop ranking and being within the first specified rank order in the within-shop ranking will start the game in this shop.

Accordingly, the players and the spectators present in the shop where the client terminal unit 1A is installed can specifically know the player virtually belonging to the shop within the third specified rank order (here, first place) in the shop ranking and being within the first specified rank order (here, within the tenth place) in the within-shop ranking. Therefore, an interest in the shop ranking and the within-shop ranking is increased and willingness to compete is urged, thereby effectively making the competition game more interesting.

Further, the player virtually belonging to the shop within the third specified rank order in the shop ranking and being within the first specified rank order in the within-shop ranking can make such an appeal to players and spectators present in an arbitrary shop that the shop to which he virtually belongs is within the third specified rank order in the shop ranking and his within-shop rank order is within the first specified rank order upon starting the game in this shop. Therefore, an interest in the shop ranking and the within-shop ranking is increased and gambling spirit is urged, thereby effectively making the competition game more interesting.

Further, when the belonging-shop setting section 361a receives the belonging-shop setting information to the effect of setting to virtually belong to the shop corresponding to the shop identification information via the belonging-shop setting screen 600 shown in FIG. 18 from the client terminal unit 1A, this shop identification information is stored in the player information storage 362a in correspondence with the player identification information of the client terminal unit 1A. Therefore, the shop where the client terminal unit 1A by means of which the game will be started can be set (registered and changed) as a shop to which the player virtually belongs.

Furthermore, since only the shop where the client terminal unit 1A by means of which the game will be started can be set as the shop to which the player virtually belongs (belonging shop), an adverse effect of weakening the meaning of the belonging shop to a group by which results are tabulated. In other words, the player needs to start the game in the shop he wishes to set as a belonging shop in order to set the desired shop as the belonging shop.

In addition, the guidance transmitting section 361f transmits the guidance information while adding an interrupt signal thereto, whereby an interrupt display of the guidance is made on the other client terminal units 1A' in the shop where the client terminal unit 1A, by means of which the game will be started, is installed. Thus, the players of the other client terminal units 1A' can confirm the guidance even if the game is being played by means of the other client terminal units 1A'. Accordingly, the guidance is displayed on the other client terminal units 1A' at an early timing, wherefore an effect of displaying the guidance can be further enhanced.

Further, since the result tabulating section 361c tabulates the results within the past specified period (here, one previous month) to determine the within-shop ranking, the frequency of determining the within-shop ranking can be adjusted by setting the duration of the specified period. In other words, the specified period is set to be shorter (e.g. one week) in the case of frequently changing the within-shop ranking while being set to be longer (e.g. one year) in the case of not frequently changing the within-shop ranking. The more frequently the within-shop ranking is changed, the more recent results are reflected on the within-shop ranking. Players' interest in the within-shop ranking is further increased by suitably setting the duration of the specified period.

Furthermore, since the ranking transmitting section 361g transmits the player identification information and the within-shop ranking information (ranking information) of the players virtually belonging to the shop server 2 of each shop and the ranking is displayed on the shop server 2 of each shop, the players can easily confirm their within-shop rank orders, thereby further increasing the players' interest in the within-shop ranking.

In this embodiment, a player belonging to a branch shop and being within the tenth place in the within-shop ranking is displayed with a guidance on the other client terminal units 1A' and the shop server 2 in the shop as long as he plays in his belonging shop. On the other hand, a player belonging to a main shop (first place in the within-area shop ranking) and being within the tenth place in the within-shop ranking is displayed with a guidance on the other client terminal units 1A' and the shop server 2 in the shop where he is playing regardless of in which shop he plays within the area. Further, a player belonging to the headquarter (first place in the nationwide shop ranking) and being within the tenth place in the within-shop ranking is displayed with a guidance on the other client terminal units 1A' and the shop server 2 in the shop where he is playing regardless of in which shop he plays nationwide. In other words, since gambling spirit is more urged (more filled with sense of satisfaction, self-respect, etc.) as the belonging shop ascends from the branch shop, to the main shop and to the headquarter, an interest in the shop ranking and the within-area shop ranking is increased.

The present invention may also be embodied as follows.
(A) Although the game is a mahjong game in the foregoing embodiment, it may be any other competition game. For example, it may be a soccer game simulating soccer or a Go game simulating Go or may be another type of game such as a roll-playing game.
(B) Although the areas are prefectures in the foregoing embodiment, they may be smaller areas such as cities, towns or villages or may be larger areas such as districts such as Kanto, Kansai and Chubu.
(C) Although the game is played within Japan in the foregoing embodiment, it may be played worldwide. In such a case, the shop ranking is preferably a worldwide shop ranking and areas are preferably set to be countries (or larger areas such as Asia and Europe).
(D) Although the result tabulating section 361c provides the nationwide shop ranking and the within-area shop ranking in the foregoing embodiment, it may provide a within-area ranking comprised of a plurality of hierarchies. For example, first divisions may be areas such as Kanto, Kansai and Chubu districts, second divisions may be prefectures and third divisions may be cities, towns or villages. In such a case, an interest in the within-area shop ranking is further increased.
(E) Although the guidance transmitting section 361f transmits the guidance information to the other client terminal units 1A' in the shop, the client terminal units 1B of the competitors and the shop server 2 in the foregoing embodiment, it may transmit the guidance information at least to the client terminal units 1A', or the client terminal units 1B of the competitors or the shop server 2.
(F) Although the guidance transmitting section 361f transmits the headquarter guidance information, the main-shop guidance information and the branch guidance information in the foregoing embodiment, it may transmit at least one of the headquarter guidance information, the main-shop guidance information and the branch guidance information.

### INDUSTRIAL APPLICABILITY

According to the inventive game progress administering system (game progress administering method, game progress administering program), players playing by means of other game terminal units in a shop where one game terminal unit is installed can specifically know a player virtually belonging to this shop and being within a first specified rank order (e.g. within the tenth place) in the within-shop ranking. Therefore, an interest in the within-shop ranking is increased and willingness to compete is urged, thereby effectively making a game more interesting.

Further, the player within the first specified rank order in the within-shop ranking can make such an appeal to the players playing by means of the game terminal units in this shop that his within-shop rank order is within the first specified rank order upon starting the game in the shop to which he virtually belongs. Therefore, an interest in the within-shop ranking is increased and gambling spirit is urged, thereby effectively making the game more interesting.

## Claims

1. A game progress administering system connected with game terminal units to be operated by players and installed in a plurality of shops via communication lines such that operation signals necessary for the progress of a game can be communicated, thereby administering the progress of the game, comprising:
player information storage means for storing player identification information, which is identification information of players, in correspondence with shop identification information, which is identification information of shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information,
result tabulating means for tabulating the results of the players for each shop, to which the players virtually belong, at every interval of a specified period to determine a within-shop ranking, and storing the determined within-shop ranking in the player information storage means in correspondence with the player identification information,
shop judging means for reading the shop identification information corresponding to the terminal identification information of the one game terminal unit from the terminal information storage means, reading the shop identification information corresponding to the player identification information received by the gaming evaluating means from the player information storage means, and judging whether or not the read two pieces of shop identification information coincide with each other,
restricting condition judging means for judging whether or not to satisfy a first restricting condition that the two pieces of shop identification information were judged to coincide by the shop judging means and that a within-shop rank order corresponding to the player identification information received from the one game terminal unit by the gaming evaluating means is within a first specified rank order, and
guidance transmitting means for transmitting guidance information including the player identification information and the within-shop ranking information of the player of the one game terminal unit to other game terminal units in the shop where the one game terminal unit is installed in order to display, on the other game terminal units, guidance to the effect that the player within the first specified rank order in the within-shop ranking will start the game if the first restricting condition is judged to be satisfied by the restricting condition judging means.

2. A game progress administering system connected with game terminal units to be operated by players and installed in a plurality of shops via communication lines such that operation signals necessary for the progress of a competition game can be communicated, thereby administering the progress of the competition game, comprising:
player information storage means for storing player identification information, which is identification information of players, in correspondence with shop identification information, which is identification information of shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the competition game, from the one game terminal unit, determining competing terminal units, which are other game terminal units to become competitors, in accordance with a specified rule, instructing the one game terminal unit and the competing terminal units to conduct the competition game, calculating a result of each player based on the result of the competition game, and storing the calculated results in the player information storage means in correspondence with the player identification information,
result tabulating means for tabulating the results of the players for each shop, to which the players virtually belong, at every interval of a specified period to determine a within-shop ranking, and storing the determined within-shop ranking in the player information storage means in correspondence with the player identification information,
restricting condition judging means for judging whether or not to satisfy a restricting condition that a within-shop rank order corresponding to the player identification information received from the one game terminal unit by the gaming evaluating means is within a first specified rank order, and
guidance transmitting means for transmitting guidance information including the player identification information and the within-shop ranking information of the player of the one game terminal unit to the competing terminal units in order to display, on the competing terminal units, guidance to the effect that the player within the first specified rank order in the within-shop ranking was determined as a competitor when the competing terminal units are determined by the gaming evaluating means if the restricting condition is judged to be satisfied by the restricting condition judging means.

3. A game progress administering system connected with game terminal units to be operated by players and installed in a plurality of shops via communication lines such that operation signals necessary for the progress of a game can be communicated, thereby administering the progress of the game, and communicably connected with shop monitor units installed in the respective shops and provided with monitors, comprising:
player information storage means for storing player identification information, which is identification information of players, in correspondence with shop identification information, which is identification information of shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information,
result tabulating means for tabulating the results of the players for each shop, to which the players virtually belong, at every interval of a specified period to determine a within-shop ranking, and storing the determined within-shop ranking in the player information storage means in correspondence with the player identification information,
shop judging means for reading the shop identification information corresponding to the terminal identification information of the one game terminal unit from the terminal information storage means, reading the shop identification information corresponding to the player identification information received by the gaming evaluating means from the player information storage means, and judging whether or not the read two pieces of shop identification information coincide with each other,
restricting condition judging means for judging whether or not to satisfy a first restricting condition that the two pieces of shop identification information were judged to coincide by the shop judging means and that a within-shop rank order corresponding to the player identification information received from the one game terminal unit by the gaming evaluating means is within a first specified rank order, and
guidance transmitting means for transmitting guidance information including the player identification information and the within-shop ranking information of the player of the one game terminal unit to the shop monitor unit in the shop where the one game terminal unit is installed in order to display, on the shop monitor unit in the shop where the one game terminal unit is installed, guidance to the effect that the player within the first specified rank order in the within-shop ranking will start the game if the first restricting condition is judged to be satisfied by the restricting condition judging means.

4. A game progress administering system connected with game terminal units to be operated by players and installed in a plurality of shops via communication lines such that operation signals necessary for the progress of a game can be communicated, thereby administering the progress of the game, comprising:
shop information storage means for storing shop identification information, which is identification information of the shops, in correspondence with area identification information, which is identification information of areas where the shops are located,
player information storage means for storing player identification information, which is identification information of players, in correspondence with the shop identification information of the shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information,
result tabulating means for tabulating the results of the players for each shop, to which the players virtually belong, at every interval of a specified period to determine a within-shop ranking, storing the determined within-shop ranking in the player information storage means in correspondence with the player identification information, tabulating the results of the players within a first specified rank order in the within-shop ranking to obtain a shop result of each shop at every interval of a specified period, determining a within-area shop ranking, which is a ranking of the respective shops, for each area where the respective shops are located in accordance with the shop results of the respective shops, and storing determined within-area shop ranking information in the shop information storage means in correspondence with the shop identification information,
shop judging means for reading the shop identification information corresponding to the terminal identification information of the one game terminal unit from the terminal information storage means, reading the shop identification information corresponding to the player identification information received by the gaming evaluating means from the player information storage means, and judging whether or not two pieces of area identification information corresponding to the read two pieces of shop identification information coincide with each other, using the shop information storage means,
restricting condition judging means for judging whether or not to satisfy a second restricting condition that the two pieces of area identification information corresponding to the two pieces of shop identification information were judged to coincide by the shop judging means, that the within-shop rank order of the player corresponding to the player identification information received from the one game terminal unit by the gaming evaluating means is within the first specified rank order, and that a within-area shop rank order of the shop to which the player corresponding to the player identification information received from the one game terminal unit by the gaming evaluating means belongs is within a second specified rank order, and
guidance transmitting means for transmitting guidance information including the player identification information, the within-shop ranking information and the within-area shop ranking information of the player of the one game terminal unit to other game terminal units in the shop where the one game terminal unit is installed in order to display, on the other game terminal units, guidance to the effect that the player virtually belonging to the shop within the second specified rank order in the within-area shop ranking and being within the first specified rank order in the within-shop ranking will start the game if the second restricting condition is judged to be satisfied by the restricting condition judging means.

5. A game progress administering system connected with game terminal units to be operated by players and installed in a plurality of shops via communication lines such that operation signals necessary for the progress of a competition game can be communicated, thereby administering the progress of the competition game, comprising:
shop information storage means for storing shop identification information, which is identification information of the shops, in correspondence with area identification information, which is identification information of areas where the shops are located,
player information storage means for storing player identification information, which is identification information of players, in correspondence with the shop identification information of the shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the competition game, from the one game terminal unit, determining competing terminal units, which are other game terminal units to become competitors, in accordance with a specified rule, instructing the one game terminal unit and the competing terminal units to conduct the competition game, calculating a result of each player based on the result of the competition game, and storing the calculated results in the player information storage means in correspondence with the player identification information,
result tabulating means for tabulating the results of the players for each shop, to which the players virtually belong, at every interval of a specified period to determine a within-shop ranking, storing the determined within-shop ranking in the player information storage means in correspondence with the player identification information, tabulating the results of the players within a first specified rank order in the within-shop ranking to obtain a shop result of each shop at every interval of a specified period, determining a within-area shop ranking, which is a ranking of the respective shops, for each area where the respective shops are located in accordance with the shop results of the respective shops, and storing determined within-area shop ranking information in the shop information storage means in correspondence with the shop identification information,
restricting condition judging means for judging whether or not to satisfy a restricting condition that a within-shop rank order of the player corresponding to the player identification information received from the one game terminal unit by the gaming evaluating means is within the first specified rank order and that a within-area shop rank order of the shop to which the player corresponding to the player identification information received from the one game terminal unit by the gaming evaluating means virtually belongs is within a second specified rank order, and
guidance transmitting means for transmitting guidance information including the player identification information, the within-shop ranking information and the within-area shop ranking information of the player of the one game terminal unit to the competing terminal units in order to display, on the competing terminal units, guidance to the effect that the player virtually belonging to the shop within the second specified rank order in the within-area shop ranking and being within the first specified rank order in the within-shop ranking was determined as a competitor when the competing terminal units are determined by the gaming evaluating means if the restricting condition is judged to be satisfied by the restricting condition judging means.

6. A game progress administering system connected with game terminal units to be operated by players and installed in a plurality of shops via communication lines such that operation signals necessary for the progress of a game can be communicated, thereby administering the progress of the game, and communicably connected with shop monitor units installed in the respective shops and provided with monitors, comprising:
shop information storage means for storing shop identification information, which is identification information of the shops, in correspondence with area identification information, which is identification information of areas where the shops are located,
player information storage means for storing player identification information, which is identification information of players, in correspondence with the shop identification information of the shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information,
result tabulating means for tabulating the results of the players for each shop, to which the players virtually belong, at every interval of a specified period to determine a within-shop ranking, storing the determined within-shop ranking in the player information storage means in correspondence with the player identification information, tabulating the results of the players within a first specified rank order in the within-shop ranking to obtain a shop result of each shop at every interval of a specified period, determining a within-area shop ranking, which is a ranking of the respective shops, for each area where the respective shops are located in accordance with the shop results of the respective shops, and storing determined within-area shop ranking information in the shop information storage means in correspondence with the shop identification information,
shop judging means for reading the shop identification information corresponding to the terminal identification information of the one game terminal unit from the terminal information storage means, reading the shop identification information corresponding to the player identification information received by the gaming evaluating means from the player information storage means, and judging whether or not two pieces of area identification information corresponding to the read two pieces of shop identification information coincide with each other, using the shop information storage means,
restricting condition judging means for judging whether or not to satisfy a second restricting condition that the two pieces of area identification information corresponding to the two pieces of shop identification information were judged to coincide by the shop judging means, that the within-shop rank order of the player corresponding to the player identification information received from the one game terminal unit by the gaming evaluating means is within the first specified rank order, and that a within-area shop rank order of the shop to which the player corresponding to the player identification information received from the one game terminal unit by the gaming evaluating means belongs is within a second specified rank order, and
guidance transmitting means for transmitting guidance information including the player identification information, the within-shop ranking information and the within-area shop ranking information of the player of the one game terminal unit to the shop monitor unit in the shop where the one game terminal unit is installed in order to display, on the shop monitor unit, guidance to the effect that the player virtually belonging to the shop within the second specified rank order in the within-area shop ranking and being within the first specified rank order in the within-shop ranking will start the game if the second restricting condition is judged to be satisfied by the restricting condition judging means.

7. A game progress administering system connected with game terminal units to be operated by players and installed in a plurality of shops via communication lines such that operation signals necessary for the progress of a game can be communicated, thereby administering the progress of the game, comprising:
shop information storage means for storing shop identification information that is identification information of the respective shops,
player information storage means for storing player identification information, which is identification information of players, in correspondence with the shop identification information of the shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information,
result tabulating means for tabulating the results of the players for each shop, to which the players virtually belong, at every interval of a specified period to determine a within-shop ranking, storing the determined within-shop ranking in the player information storage means in correspondence with the player identification information, tabulating the results of the players within a first specified rank order in the within-shop ranking for each shop at every interval of a specified period to obtain a shop result, determining a shop ranking, which is a ranking of the respective shops, in accordance with the shop results of the respective shops, and storing the determined shop ranking information in the shop information storage means in correspondence with the shop identification information,
restricting condition judging means for judging whether or not to satisfy a third restricting condition that a within-shop rank order of the player corresponding to the player identification information received from the one game terminal unit by the gaming evaluating means is within the first specified rank order and that a shop rank order of the shop to which the player virtually belongs is within a third specified rank order, and
guidance transmitting means for transmitting guidance information including the player identification information, the within-shop ranking information and the shop ranking information of the player of the one game terminal unit to other game terminal units in the shop where the one game terminal unit is installed in order to display, on the other game terminal units, guidance to the effect that the player virtually belonging to the shop within the third specified rank order in the shop ranking and being within the first specified rank order in the within-shop ranking will start the game if the third restricting condition is judged to be satisfied by the restricting condition judging means.

8. A game progress administering system connected with game terminal units to be operated by players and installed in a plurality of shops via communication lines such that operation signals necessary for the progress of a competition game can be communicated, thereby administering the progress of the competition game, comprising:
shop information storage means for storing shop identification information that is identification information of the respective shops,
player information storage means for storing player identification information, which is identification information of players, in correspondence with the shop identification information of the shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the competition game, from the one game terminal unit, determining competing terminal units, which are other game terminal units to become competitors, in accordance with a specified rule, instructing the one game terminal unit and the competing terminal units to conduct the competition game, calculating a result of each player based on the result of the competition game, and storing the calculated results in the player information storage means in correspondence with the player identification information,
result tabulating means for tabulating the results of the players for each shop, to which the players virtually belong, at every interval of a specified period to determine a within-shop ranking, storing the determined within-shop ranking in the player information storage means in correspondence with the player identification information, tabulating the results of the players within a first specified rank order in the within-shop ranking for each shop at every interval of a specified period to obtain a shop result, determining a shop ranking, which is a ranking of the respective shops, in accordance with the shop results of the respective shops, and storing the determined shop ranking information in the shop information storage means in correspondence with the shop identification information,
restricting condition judging means for judging whether or not to satisfy a third restricting condition that a within-shop rank order of the player corresponding to the player identification information received from the one game terminal unit by the gaming evaluating means is within the first specified rank order and that a shop rank order of the shop to which the player virtually belongs is within a third specified rank order, and
guidance transmitting means for transmitting guidance information including the player identification information, the within-shop ranking information and the shop ranking information of the player of the one game terminal unit to the competitor terminal units in order to display, on the competitor terminal units, guidance to the effect that the player virtually belonging to the shop within the third specified rank order in the shop ranking and being within the first specified rank order in the within-shop ranking was determined as a competitor if the third restricting condition is judged to be satisfied by the restricting condition judging means.

9. A game progress administering system connected with game terminal units to be operated by players and installed in a plurality of shops via communication lines such that operation signals necessary for the progress of a game can be communicated, thereby administering the progress of the game, and communicably connected with shop monitor units installed in the respective shops and provided with monitors, comprising:
shop information storage means for storing shop identification information that is identification information of the respective shops,
player information storage means for storing player identification information, which is identification information of players, in correspondence with the shop identification information of the shops to which the players virtually belong,
terminal information storage means for storing terminal identification information, which is identification information of the game terminal units, in correspondence with the shop identification information of the shops where the game terminal units are installed,
gaming evaluating means for receiving the terminal identification information of one game terminal unit, the player identification information and a game start signal, which is an operation signal to the effect of starting the game, from the one game terminal unit, instructing the one game terminal unit to conduct the game, calculating a result of each player based on the result of the game, and storing the calculated results in the player information storage means in correspondence with the player identification information,
result tabulating means for tabulating the results of the players for each shop, to which the players virtually belong, at every interval of a specified period to determine a within-shop ranking, storing the determined within-shop ranking in the player information storage means in correspondence with the player identification information, tabulating the results of the players within a first specified rank order in the within-shop ranking for each shop at every interval of a specified period to obtain a shop result, determining a shop ranking, which is a ranking of the respective shops, in accordance with the shop results of the respective shops, and storing the determined shop ranking information in the shop information storage means in correspondence with the shop identification information,
restricting condition judging means for judging whether or not to satisfy a third restricting condition that a within-shop rank order of the player corresponding to the player identification information received from the one game terminal unit by the gaming evaluating means is within the first specified rank order and that a shop rank order of the shop to which the player virtually belongs is within a third specified rank order, and
guidance transmitting means for transmitting guidance information including the player identification information, the within-shop ranking information and the shop ranking information of the player of the one game terminal unit to the shop monitor unit in the shop where the one game terminal unit is installed in order to display, on the shop monitor unit in the shop where the one game terminal unit is installed, guidance to the effect that the player virtually belonging to the shop within the third specified rank order in the shop ranking and being within the first specified rank order in the within-shop ranking will start the game if the third restricting condition is judged to be satisfied by the restricting condition judging means.

10. A game progress administering system according to any one of claims 1 to 9, further comprising belonging-shop setting means for reading the shop identification information corresponding to the terminal identification information of the one game terminal unit from the terminal information storage means, transmitting the shop identification information to the one game terminal unit, and storing the shop identification information in the player information storage means in correspondence with the player identification information of the one game terminal unit upon receiving belonging-shop setting information to the effect of setting to virtually belong to the shop corresponding to the shop identification information from the one game terminal unit when the terminal identification information of the one game terminal unit is received from the one game terminal unit by the gaming evaluating means.

11. A game progress administering system according to any one of claims 1, 4 and 7, wherein the guidance transmitting means transmits the guidance information to the other game terminal units while adding an interrupt signal thereto in order to make an interrupt display of the guidance on the other game terminal units.

12. A game progress administering system according to any one of claims 1 to 3, wherein the result tabulating means determines the within-shop ranking by tabulating the results of the players within a specified past period for each shop to which the players virtually belong, and stores the determined within-shop ranking in the player information storage means in correspondence with the player identification information.

13. A game progress administering system according to claim 3, further comprising within-shop ranking transmitting means for transmitting the player identification information and the within-shop ranking information of the players virtually belonging to each shop to the shop monitor unit of each shop in order to display the player identification information and the within-shop ranking information of the players virtually belonging to each shop in the form of a ranking on the shop monitor unit of each shop.

14. A game progress administering system according to any one of claims 4 to 9, wherein the guidance information further includes shop identification information of the shop to which the player of the one game terminal unit virtually belongs.

15. A game progress administering method using a game progress administering system connected with game terminal units to be operated by players and installed in a plurality of shops via communication lines such that operation signals necessary for the progress of a game can be communicated, thereby administering the progress of the game, comprising:
a step in which player information storage means of the game administering system stores player identification information, which is identification information of players, in correspondence with shop identification information, which is identification information of shops to which the players virtually belong,
a step in which terminal information storage means of the game administering system stores terminal identification information, which is identification information of the game terminal units, in correspondence with the shop identification information of the shops where the game terminal units are installed,
a step in which gaming evaluating means of the game administering system receives the terminal identification information of one game terminal unit, the player identification information and a game start signal, which is an operation signal to the effect of starting the game, from the one game terminal unit, instructs the one game terminal unit to conduct the game, calculating a result of each player based on the result of the game, and stores the calculated results in the player information storage means in correspondence with the player identification information,
a step in which result tabulating means of the game administering system tabulates the results of the players for each shop, to which the players virtually belong, at every interval of a specified period to determine a within-shop ranking, and stores the determined within-shop ranking in the player information storage means in correspondence with the player identification information,
a step in which shop judging means of the game administering system reads the shop identification information corresponding to the terminal identification information of the one game terminal unit from the terminal information storage means, reads the shop identification information corresponding to the player identification information received by the gaming evaluating means from the player information storage means, and judges whether or not the read two pieces of shop identification information coincide with each other,
a step in which restricting condition judging means of the game administering system judges whether or not to satisfy a first restricting condition that the two pieces of shop identification information were judged to coincide by the shop judging means and that a within-shop rank order corresponding to the player identification information received from the one game terminal unit by the gaming evaluating means is within a first specified rank order, and
a step in which guidance transmitting means of the game administering system transmits guidance information including the player identification information and the within-shop ranking information of the player of the one game terminal unit to other game terminal units in the shop where the one game terminal unit is installed in order to display, on the other game terminal units, guidance to the effect that the player within the first specified rank order in the within-shop ranking will start the game if the first restricting condition is judged to be satisfied by the restricting condition judging means.
